Europäisches Patentamt

European Patent Office

Office européen des brevets

(11) Veröffentlichungsnummer: **0 116 155**
**B1**

# EUROPÄISCHE PATENTSCHRIFT

(45) Veröffentlichungstag der Patentschrift:
21.06.89

(21) Anmeldenummer: **83112719.6**

(22) Anmeldetag: **17.12.83**

(51) Int. Cl.⁴: **B 01 D 13/00,** B 65 H 54/56,
D 01 D 5/24, F 28 F 21/06

(54) **Verfahren und Vorrichtung zum Herstellen von Hohlfadenbündeln.**

(30) Priorität: **17.01.83 DE 3301268**

(43) Veröffentlichungstag der Anmeldung:
**22.08.84 Patentblatt 84/34**

(45) Bekanntmachung des Hinweises auf die Patenterteilung:
**21.06.89 Patentblatt 89/25**

(84) Benannte Vertragsstaaten:
**FR IT NL**

(56) Entgegenhaltungen:
**DE-A-2 304 839**
**DE-A-2 818 946**
**DE-A-3 102 331**
**DE-B-1 212 714**
**FR-A-2 231 421**
**FR-A-2 437 858**
**US-A-1 401 516**
**US-A-2 559 314**
**US-A-3 616 928**

(73) Patentinhaber: **Akzo Patente GmbH, Postfach 10 01
49 Kasinostrasse 19- 23, D-5600 Wuppertal- 1 (DE)**

(72) Erfinder: **Baumgart, Rudolf, Laaker Landwehr 48,
D-5600 Wuppertal 2 (DE)**
Erfinder: **Martin, Manfred, Obere Sehlhofstrasse
35, D-5600 Wuppertal 2 (DE)**
Erfinder: **Löw, Lothar, Forstweg 32, D-8751
Eisenfeld (DE)**
Erfinder: **Scheven, Gunter, Dipl.- Ing., Dr. Jordan-
Strasse 2, D-8765 Erlenbach (DE)**

## Beschreibung

Die Erfindung betrifft ein Verfahren zum Herstellen von Hohlfadenbündeln mit im wesentlichen parallel zueinander angeordneten Hohlfäden, bei welchem wenigstens ein Hohlfaden mit einer bewegten Fadenführungseinrichtung um wenigstens zwei in einem gegenseitigen Abstand voneinander angeordnete Fadenaufnahmeorgane zu einem Hohlfadenstrang aufgewickelt wird, sowie eine Vorrichung zum Durchführen des Verfahrens und ein Bündel aus gewellten Hohlfäden.

Ein solches Verfahren ist aus der deutschen Offenlegungsschrift 2 259 949 bekannt. Dieses bekannte Verfahren wird unter Einsatz von flexiblem auf Spulen oder Spindeln endlos aufgewickeltem Hohlfasermaterial durchgeführt, wobei die Hohlfasern mit einer umlaufenden Fadenführungseinrichtung in vier paarweise angeordnete Halbschalen abgelegt werden. Je zwei Halbschalen sind dabei mit ihren konvexen Seiten zueinanderliegend angeordnet und eingespannt und die beiden so ausgebildeten Halbschalenpaare wiederum sind fluchtend in einer Ebene so angeordnet, daß der Abstand zwischen ihnen die Länge des Hohlfaserbündels ergibt. Dieses bekannte Verfahren ist nicht für die Herstellung von Hohlfadenbündeln aus frischgesponnenen Hohlfäden geeignet, denn bei Erreichen der gewünschten Bündelstärke muß der Ablegevorgang solange unterbrochen werden, bis ein Satz ungefüllter Halbschalen in die dafür vorgesehenen Positionen gebracht und eingespannt ist. Weiterhin gestattet es dieses bekannte Verfahren, insgesamt nur zwei Teilbündel herzustellen, nämlich die beiden Hälften des endgültigen Faserbündels, welches durch Zusammenfügen der beiden Teilbündel gebildet wird.

Es sind auch andere, nicht gattungsgemäße, Verfahren zum Herstellen von Hohlfadenbündeln bekannt, beispielsweise aus der deutschen Offenlegungsschrift 3 102 331, bei welchen die Hohlfäden auf einen Haspel gewickelt einen ringförmigen Körper aus Hohlfäden bilden, der dann zu einzelnen Bündeln zerschnitten wird. Nachteilig an diesem bekannten Verfahren ist, daß die gesamte Masse des Haspels und der darauf bereits aufgewickelten Hohlfäden in Drehung gehalten werden muß und sich dieses Verfahren ebenfalls, insbesondere auch aus diesem Grund, nicht zum Herstellen von Hohlfadenbündeln aus frischgesponnenen Hohlfäden eignet, weshalb auch bei diesem bekannten Verfahren nur auf Spulen aufgewickelte Hohlfäden verwendet werden können. Das Zerschneiden des ringförmigen Körpers aus Hohlfäden zu einzelnen Bündeln kann dort ebenfalls nur durch Unterbrechen des Bewickelns des Haspels, also bei Stillstand des Haspels, durchgeführt werden.

Aus der US-A-2 559 314 ist eine Strangwickelmaschine zum Herstellen von Garnsträngen mit im wesentlichen parallel zueinander angeordneten Längsabschnitten bekannt. Diese Druckschrift enthält jedoch keinen Hinweis darauf, daß mit dieser Strangwickelmaschine auch Hohlfäden zu Garnsträngen aufgewickelt werden können, und auch keinen Hinweis darauf, daß die Garnstränge zu Bündeln zerschnitten werden.

Es muß als verwunderlich angesehen werden, daß zwar bereits eine große Anzahl von Verfahren und Vorrichtungen zum Herstellen von Hohlfadenbündeln der genannten Art vorgeschlagen wurden, daß alle diese aber nur zur Verarbeitung von auf Spulen aufgewickelten Hohlfäden geeignet sind, da bei ihnen nach Erreichen der gewünschten Wickelstärke eine Unterbrechung des Bewicklungsvorganges unumgänglich ist.

Der vorliegenden Erfindung liegt daher die Aufgabe zugrunde, ein Verfahren zur Verfügung zu stellen, welches ein rationelleres Herstellen von Hohlfadenbündeln gestattet und bei welchem das bisher unumgängliche vorherige Herstellen von Hohlfadenspulen nicht mehr erforderlich ist, d.h. welches es gestattet, Hohlfadenbündel der genannten Art auch aus frischgesponnenen Hohlfäden herzustellen. Eine weitere Aufgabe besteht darin, das Zerschneiden der aufgewickelten Hohlfäden in einzelne Bündel und das Weiterverarbeiten dieser Bündel, beispielsweise das Verpacken derselben, an allen Bündeln gleichzeitig durchführen zu können. Eine Teilaufgabe besteht darin, lockere Hohlfadenbündel zur Verfügung zu stellen, die hohe Wärme- bzw. Stoffübertragungsleistungen, also beispielsweise hohe Flußraten bzw. Clearence-Daten gewährleisten. Darüber hinaus soll ein Verfahren zur Verfügung gestellt werden, welches universell einsetzbar ist und betrieblichen Gegebenheiten und individuellen Wünschen auf einfache Weise angepaßt werden kann. Eine weitere Teilaufnahme besteht darin, Hohlfadenbündel unterschiedlicher Länge gleichzeitig herstellen zu können sowie ein Hohlfadenbündel aus frischgesponnenen gewellten Hohlfäden zur Verfügung zu stellen.

Zur Lösung dieser Aufgabe wird ein gattungsgemäßes Verfahren vorgeschlagen, bei welchem erfindungsgemäß die bewickelten Fadenaufnahmeorgane jeweils nach Erreichen der gewünschten Strangstärke, also taktweise, aus dem von der Fadenführungseinrichtung überstrichenen Bewicklungsbereich herausbewegt werden, daß gleichzeitig unbewickelte Fadenaufnahmeorgane in den Bewicklungsbereich und dort in Arbeitsstellung gebracht werden, wobei gegebenenfalls vorhandene weitere Fadenaufnahmeorgane analog diesem Transporttakt ebenfalls nur taktweise vorwärtsbewegt werden, um auf diese Weise in freigewordene Positionen nachzurücken, und daß der Hohlfadenstrang anschließend in Bündel zerschnitten wird.

Das erfindungsgemäße Verfahren ist zur Verarbeitung von aufgespulten Hohlfäden sowie von frischgesponnenen Hohlfäden gleichermaßen geeignet, wobei seine besonderen Vorteile verständlicherweise bei der Verarbeitung von frischgesponnenen Hohlfäden erst richtig zur Geltung kommen. Unter frischgesponnenen Hohlfäden werden hierbei solche verstanden, die nach einem Naßspinnverfahren, einem Schmelzspinnverfahren, einem Trockenspinnverfahren oder einem anderen bekannten Herstellungsverfahren hergestellt wurden, wobei das Aufwickeln der Hohlfäden zu einem Strang im allgemeinen in demjenigen Zustand bzw. annähernd demjenigen Zustand erfolgt, in welchem die Hohlfäden sonst üblicherweise zu Spulen aufgespult werden. Das bedeutet, daß übliche Behandlungsschritte in flüssigen oder gasförmigen Medien, Kühlen, Trocknen, Wärmebehandeln usw. im allgemeinen vor der Strangbildung bereits weitestgehend durchgeführt sind, sofern sich dies als zweckmäßig erweisen sollte, jedoch auch erst zu einem späteren Zeitpunkt durchgeführt werden können. Es können jedoch auch frischgesponnene Hohlfäden und zuvor aufgespulte Hohlfäden in beliebigen Mengenverhältnissen erfindungsgemäß zu einem Bündel zusammengefaßt werden.

Bekanntlich erfolgt das Herstellen von Hohlfäden nach den obengenannten Verfahren kontinuierlich, da verfahrensbedingt eine auch nur kurzzeitige Unterbrechung des Ausspinnens zu erheblichen betrieblichen Störungen und zu einem hohen Abfallanteil führen würde. Nach Erreichen der gewünschten Strangstärke ist es daher erforderlich, den Strang möglichst schnell und störungsfrei aus dem Bewicklungsbereich zu entfernen. Je nach Ausgestaltung der Fadenaufnahmeorgane ist es vorstellbar und möglich, den fertigen Strang beispielsweise von Hand von den Fadenaufnahmeorganen abzunehmen und zu entfernen. Eine solche Handhabung ist für die betriebliche Praxis im allgemeinen jedoch ungeeignet, da sie beispielsweise zur Verschmutzung oder zu Beschädigungen der Hohlfäden führen kann und darüber hinaus das Verarbeiten des Hohlfadenstranges zu Bündeln, also das Zerschneiden des Stranges in einzelne Abschnitte, sowie das anschließende Verpacken u.dgl. im allgemeinen nur bei einer gewissen Hohlfadenspannung möglich ist und der Hohlfadenstrang aus diesem Grund daher möglichst lange die ihm bei seiner Herstellung gegebene Form beibehalten sollte.

Aus diesem Grunde hat es sich als besonders vorteilhaft erwiesen, in der erfindungsgemäß vorgeschlagenen Weise den Hohlfadenstrang nach Erreichen der gewünschten Strangstärke zusammen mit den ihn haltenden Fadenaufnahmeorganen aus dem Bewicklungsbereich zu entfernen und gleichzeitig unbewickelte Fadenaufnahmeorgane in den Bewicklungsbereich und dort in die richtige Position. d.h. in die Arbeitsstellung. zu bringen. Diese Vorgehensweise gestattet das ununterbrochene Verarbeiten von frischgesponnenen Hohlfäden zu Strängen über beliebig lange Zeiträume.

Bei dem erfindungsgemäßen Verfahren kann ein einzelner Hohlfaden, können vorzugsweise jedoch auch mehrere Hohlfäden gleichzeitig, beispielsweise 20 oder mehr, als Kabel zu einem Hohlfadenstrang aufgewickelt werden. Beim Bewickeln von nur zwei Fadenaufnahmeorganen entsteht ein Strang, dessen Form einem langgezogenen O gleicht. Beim Bewickeln von mehr als zwei Fadenaufnahmeorganen, die nicht in einer Linie angeordnet sind, entsteht ein Strang, der die Form eines Polygons hat. Während der Bildung des Hohlfadenstranges verharren die bereits aufgewickelten Hohlfäden in Ruhe und verbleiben zunächst in dem durch die bewegte Fadenführungseinrichtung festgelegten Bewicklungsbereich. Erst nach Erreichen der gewünschten Strangstärke, d.h. wenn der Hohlfadenstrang so viele Windungen aufweist, wie Hohlfäden in dem fertigen Hohlfadenbündel enthalten sein sollen, wird der Hohlfadenstrang aus dem von der Fadenführungseinrichtung überstrichenen Bewicklungsbereich fortbewegt und werden unbewickelte Fadenaufnahmeorgane im Bewicklungsbereich in Arbeitsstellung gebracht, so daß das Aufwickeln der Hohlfäden nunmehr um diese erfolgt. Das Fortführen der aufgewickelten Hohlfäden erfolgt beim erfindungsgemäßen Verfahren also nicht fortlaufend, sondern taktweise. Diese Verfahrensweise bietet den großen Vorteil, daß während des Stillstands der fertigen Hohlfadenstränge, d.h. also zwischen den nur kurzzeitigen Bewegungstakten, an den Hohlfadensträngen die üblichen Manipulationen vorgenommen werden können, wie beispielsweise das Einbinden, das Zerschneiden zu Bündeln gewünschter Länge, das Verpacken u.dgl.

Beim Herstellen eines polygonalen Hohlfadenstranges, bei dem jede Seite des Polygons ungefähr der Länge der herzustellenden Hohlfadenbündel entspricht, können auf diese Weise alle je ein Hohlfadenbündal ergebenden Abschnitte des Hohlfadenstranges gleichzeitig weiterverarbeitet werden.

Das erfindungsgemäße Verfahren gestattet es auch, Hohlfadenbündel unterschiedlicher Länge herzustellen. Zu diesem Zweck können wenigstens drei Fadenaufnahmeorgane ein Polygon bildend derart angeordnet und bewickelt werden, daß ein polygonaler Hohlfadenstrang mit unterschiedlichen Seitenlängen gebildet wird, wobei jede Seitenlänge ungefähr einer Bündellänge entspricht. Dabei können einzelne Seiten auch gleiche Länge haben, so daß Hohlfadenbündel unterschiedlicher Länge auch in unterschiedlichen Mengenverhältnissen hergestellt werden können. Darüber hinaus ist es auch möglich, mehrere Hohlfadenbündel gleicher Länge zu einem größeren Bündel zu vereinen, so daß auf diese Weise auch Hohlfadenbündel mit unterschiedlich vielen Hohlfäden hergestellt werden können.

Mit dem erfindungsgemäßen Verfahren können alle gebräuchlichen Hohlfäden zu Hohlfadenbündeln der vorliegend genannten Art in beliebiger Stärke verarbeitet werden, also z. B. solche, die für den Stoffaustausch bzw. die Stoffübertragung, die Wärmeübertragung, die kombinierte Stoff-Wärme-Übertragung oder für andere mit Hohlfadenbündeln üblicherweise durchgeführte Verfahren geeignet sind.

Frischgesponnene Hohlfäden haben im allgemeinen eine glatte Oberfläche und werden im allgemeinen in gerader, allenfalls leicht gebogener Form erhalten. Eine solche Form ist in vielen Fällen erwünscht und mit Vorteilen verbunden. Häufig führt eine solche Form der Hohlfäden jedoch dazu, daß sich die Hohlfäden in einem Bündel über weite Strecken linienförmig gegenseitig berühren, wodurch ein Teil der den Wärme- oder Stoffaustausch bewirkenden Oberfläche der Hohlfäden unwirksam wird. Auch ist ein gleichmäßiges Umströmen aller solcher in einem Bündel enthaltenen Hohlfäden dann häufig nicht mehr gewährleistet. Es hat sich daher als besonders vorteilhaft erwiesen, Hohlfäden, die zu einem ungeordneten Bündel ohne Abstandshalter verarbeitet werden sollen, eine von der geradlinigen Form stark abweichende Form zu geben. Solche Hohlfäden bewirken einen lockeren Bündelaufbau und führen somit zu einer erhöhten Wärme- bzw. Stoff-Übertragungsleistung des Hohlfadenbündels.

Es wurden zwar schon Verfahren zum Kräuseln von Hohlfäden vorgeschlagen, da die nach diesen Verfahren gekräuselten Hohlfäden jedoch anschließend zu Stapelfasern verarbeitet wurden, die dann als Füllmaterial für Kissen, Bekleidungsstücke u.dgl. verwendet wurden, wurde kein Nachteil darin gesehen, daß die Hohlfäden bei diesen Verfahren geknickt und sogar stark geschädigt wurden. Im Gegenteil häufig wurden bzw. werden diese Verfahren sogar gezielt so geführt, daß die Hohlfäden beim Kräuseln aufspleißen oder in einzelne Fibrillen aufgeteilt werden. Diese bekannten Verfahren sind daher nicht geeignet, Hohlfäden eine von der geradlinigen Form abweichende Form zu geben, ohne sie dabei für die oben genannten Einsatzzwecke unbrauchbar zu machen.

Eine solche, die Übertragungsleistung von Hohlfadenbündeln erhöhende, Formgebung der Hohlfäden, bei welcher eine Beschädigung der Hohlfäden mit an Sicherheit grenzender Wahrscheinlichkeit vermieden wird, wird dann erreicht, wenn die Hohlfäden erfindungsgemäß gewellt werden. Ein erfindungsgemäß gewellter Hohlfaden hat in besonders bevorzugter Ausgestaltung die Form einer regelmäßigen in einer Ebene liegenden Welle, eine in einer Ebene liegende zickzackförmige Wellung, bei welcher sich gebogene und ungebogene Bereiche abwechseln, wobei die gebogenen Bereiche, in denen also eine Richtungsänderung des Hohlfadenverlaufs stattfindet, keine Knickstellen darstellen, sondern einen ausreichend bemessenen Radius haben, oder die Form einer Schraubenfeder (Locke), welche beim Versuch, einen solcher Art geformten Hohlfaden in die gestreckte, also geradlinige, Form überzuführen, in eine fläche Wellenform übergeht. Die durch das erfindungsgemäße Wellen der Hohlfäden entstehende Form der Wellung umfaßt nicht die Form, die entsteht, wenn ein ungewellter Hohlfaden in Form eines Polygons, also beispielsweise um einen Haspel, aufgewickelt und in dieser Form einer Fixierbehandlung unterworfen wird. Bei dieser Form der Wellung findet nämlich an den Biegestellen nicht wie bei erfindungsgemäß gewellten Hohlfäden eine Änderung des Richtungssinnes im Verlauf des gewellten Hohlfadens statt, ist die Amplitude der Wellung zu schwach und ist die Länge der Wellung so groß, so daß die mit erfindungsgemäß gewellten Hohlfäden erzielbaren Ergebnisse hinsichtlich der Übertragungsleistung des Hohlfadenbündels mit solchen Hohlfäden nicht erreicht werden.

Die Form der Wellung der Hohlfäden kann unregelmäßig, jedoch in Form eines Rapports, also einer regelmäßigen Wiederholung der an sich unregelmäßigen Form, vorliegen. Es hat sich jedoch als für den betrieblichen Einsatz vorteilhafter erwiesen, für die Wellung der Hohlfäden eine regelmäßige Wellenform, eine regelmäßige Zick-Zack-Form oder eine regelmäßige Schraubenfederform zu wählen.

Die Verarbeitung von Strängen aus gewellten Hohlfäden zu Hohlfadenbündeln kann vorzugsweise im quasi ausgestreckten Zustand der Hohlfäden erfolgen. Die Auflockerung des Hohlfadenbündels kann dann beispielsweise beim Einbau desselben in ein Gehäuse herbeigeführt werden, indem für das Hohlfadenbündel in dem Gehäuse eine kürzere Einbaulänge gewählt wird, als der Länge des gestreckten Hohlfadenbündels entspricht.

Das Wellen frischgesponnener Hohlfäden muß nun ebenfalls in der Weise erfolgen, daß der übliche Ablauf des Hohlfadenherstellungsverfahrens nicht beeinträchtigt und schon gar nicht unterbrochen wird, d.h. daß das Wellen entweder kontinuierlich vor dem Aufwickeln der Hohlfäden zu einem Strang durchgeführt werden muß oder erst, nachdem der fertige Strang aus dem Bewicklungsbereich entfernt worden ist, wobei im letzteren Fall das Wellen der Hohlfäden vorzugsweise dann erst nach dem Zerschneiden des Hohlfadenstranges in Bündel durchgeführt wird.

Zum erfindungsgemäßen Wellen der Hohlfäden werden die Hohlfäden vorzugsweise in eine definiert vorgegebene immerwiederkehrende Form gebracht und in dieser Form einer Fixierung unterworfen, so daß die Hohlfäden im Anschluß daran die Form, in die sie zuvor gebracht worden waren, zumindest teilweise bis größtenteils aufweisen und beibehalten. Bei der Suche nach einem geeigneten Fixierverfahren sind dabei die späteren Einsatzbedingungen für das Hohlfadenbündel zu berücksichtigen, um zu verhindern, daß die erfindungsgemäß den Hohlfäden erteilte Wellung beim betrieblichen Einsatz des Hohlfadenbündels wieder verlorengeht.

Je nach Art der zu verarbeitenden Hohlfäden kann für das Fixieren der den Hohlfäden aufgezwungenen Form der Wellung eine längere Zeitspanne erforderlich sein, so daß das Hindurchführen der Hohlfäden beispielsweise durch zwei kämmende sich jedoch nicht berührende Zahnräder hierzu nicht ausreicht oder die Verarbeitungsgeschwindigkeit auf ein nicht mehr vertretbares oder technisch nur schwer realisierbares Maß reduziert werden müßte. Für solche Zwecke wird ein Verfahren vorgeschlagen, bei welchem erfindungsgemäß die Hohlfäden zick-zackförmig um in zwei Ebenen und in Abständen voneinander angeordnete runde Stäbe geführt werden, die mit derselben Geschwindigkeit wie die Hohlfäden kontinuierlich durch die Fixierzone geführt werden. Eine Vorrichtung, die diese Verfahrensweise ermöglicht, ist unten beschrieben und in den Figuren dargestellt.

Bei dieser Ausführungsform des erfindungsgemäßen Verfahrens können der Abstand der Fadenaufnahmeorgane und die Wellenlänge der Wellung der Hohlfäden so bemessen werden, daß im fertigen Hohlfadenbündel die Hohlfäden mit einer gegenseitigen Phasenverschiebung angeordnet sind, d.h. daß Wellentäler und Wellenberge verschiedener Hohlfäden an unterschiedlichen Stellen liegen. Dies läßt sich jedoch auch noch auf andere Weise erreichen, so beispielsweise, indem die den Strang bildenden Hohlfäden in der Fixierzone eine Wellung mit unterschiedlicher Wellenlänge erhalten oder bei gleicher Wellenlänge bereits in der Fixierzone die gewünschte Phasenverschiebung eingestellt wird. Auch dadurch, daß man die Wegstrecke der Hohlfäden zwischen der Wellungszone und der Strangwickeleinrichtung unterschiedlich lang bemißt, beispielsweise durch unterschiedlich starke Auslenkungen der Hohlfäden, kann eine solche Phasenverschiebung erreicht werden.

Bei ausreichender Festigkeit der Hohlfäden können diese beispielsweise auch über einen feststehenden Rundstab mit einer gewindeähnlich verlaufenden Rille gezogen und dabei gleichzeitig einem Fixierverfahren unterworfen werden, so daß die Schraubenfederform, die die Hohlfäden auf dem Gewindestab einnehmen, einfixiert wird.

Das erfindungsgemäße Verfahren wird dabei vorzugsweise so durchgeführt, daß die gewellten Hohlfäden in im wesentlichen ausgestreckter Form aus der Wellungszone weggeführt und zu einem Strang aufgewickelt werden.

Soll das Wellen der Hohlfäden erst nach der Strangbildung durchgeführt werden, so empfiehlt es sich, aus dem Strang zunächst die Hohlfadenbündel in gewünschter Länge zu fertigen, also herauszuschneiden, den Bündeln dann die gewünschte Form der Wellung aufzuzwingen und die anschließend in dieser Form einem Fixierverfahren zu unterwerfen.

Das Wellen kann auch nur abschnittsweise durchgeführt werden, so daß sich gewellte und ungewellte Hohlfadenabschnitte auch im fertigen Hohlfadenbündel abwechseln.

Durch einfache Versuche läßt sich ermitteln, ob es notwendig ist, alle zur Herstellung von Hohlfadenbündeln vorgesehenen Hohlfäden zu wellen, oder ob es ausreicht, wenn nur ein Teil der Hohlfäden gewellt ist, und wie groß gegebenenfalls der dabei erforderliche Mindestanteil an gewellten Hohlfäden zu bemessen ist.

Hohlfäden, die zur Aufrechterhaltung ihrer Form zumindest bei ihrer Herstellung mit einer Flüssigkeit oder einem Druckgas gefüllt sind, neigen verständlicherweise weniger zum Einknicken an den Umlenk- bzw. Biegestellen, so daß bei solchen Hohlfäden gegebenenfalls kleinere Krümmungsradien gewählt werden können als bei Hohlfäden, ohne ein solches ihr Lumen ausfüllendes Fluid. Hierdurch können sich auch unterschiedliche Bemessungsgrenzen für die ein Knicken der Hohlfäden vermeidenden Krümmungsradien ergeben je nachdem, ob die Hohlfäden bereits vor dem Aufwickeln gewellt werden oder erst nach dem Zerschneiden des Hohlfadenstranges, da spätestens hierdurch ein in den Hohlfäden gegebenenfalls enthaltenes Fluid die Gelegenheit erhält, aus den Hohlfäden auszuströmen.

Wie bereits erwähnt, befindet sich beim erfindungsgemäßen Verfahren sowohl der im Aufbau befindliche als auch der bereits fertiggestellte und aus dem Bewicklungsbereich gebrachte Hohlfadenstrang (es können derer auch mehrere sein) in Ruhestellung. Diese wird nur kurzzeitig durch die bereits oben ausführlich erläuterten Transporttakte unterbrochen. Erfolgt das Bewickeln der Fadenaufnahmeorgane nun derart, daß der fertige Hohlfadenstrang in einer im wesentlichen waagerechten Ebene liegt, so liegen auch alle geraden, zur Bildung der Hohlfadenbündel bestimmten Teilabschnitte des im allgemeinen polygonalen Hohlfadenstranges auf gleicher Höhe. Hierdurch wird die weitere Verarbeitung des Hohlfadenstranges zu Bündeln wesentlich erleichtert, da es möglich ist, beispielsweise die hierfür erforderlichen Arbeiten von verschiedenen Bedienungspersonen gleichzeitig an den verschiedenen Strangabschnitten durchfuhren zu lassen. Weitaus größere Vorteile bietet diese Art der Strangherstellung bei dem Bestreben, so viele Bearbeitungsschritte wie möglich, also beispielsweise das Zusammenfassen der genannten Abschnitte des Hohlfadenstranges, das Abschneiden der Hohlfadenbündel oder das Verpacken derselben, zu automatisieren. Darüber hinaus ist es hierdurch möglich, die beispielshalber zuvor genannten Bearbeitungsschritte an allen Abschnitten des Hohlfadenstranges auch in diesem Falle gleichzeitig durchzuführen, indem an jedem der betreffenden Abschnitte entsprechende Einrichtungen, die weiter unten ausführlich beschrieben und in den Figuren dargestellt sind, vorgesehen werden. Auf diese Weise können auch bei kurzer Taktfolge für den Strangausstoß die nachfolgenden Bearbeitungsschritte in der notwendigen Kürze der Zeit durchgeführt werden.

Das erfindungsgemäße Verfahren hat sich als besonders vorteilhaft bei der Herstellung von Hohlfadenbündeln aus äußerst empfindlichen und dünnwandigen Hohlfäden erwiesen, die eine schonende Verarbeitung und Behandlung erfordern und bei denen es leicht zu Beschädigungen, Fadenbrüchen u.dgl. unerwünschten Ereignissen bei der Herstellung und Weiterverarbeitung kommt. So können mit dem erfindungsgemäßen Verfahren erfolgreich und ohne Erhöhung des betriebsüblichen Abfallanteils frischgesponnene Hohlfäden, die durch Regenerieren von Cellulose aus Kupferammonium-Cellulose-Lösungen gewonnen werden, zu Hohlfadenbündeln der vorliegend genannten Art verarbeitet werden, wie sie beispielsweise in handelsüblichen Dialysatoren Verwendung finden, wobei hervorragende Harnstoff-Clearence-Werte erreicht wurden. Solche Hohlfäden durchlaufen nach Verlassen der Spinndüse verschiedene Wasch- und Behandlungsstrecken, in denen die Hohlfäden getaucht durch entsprechende Flüssigkeitsbäder hindurchgeführt und vor dem Aufwickeln getrocknet werden. Bei diesem Verfahren läßt sich das Wellen der Hohlfäden beispielsweise in der Trockenzone durchführen, wobei die noch nassen Hohlfäden in die gewünschte Form der Wellung gebracht werden und in dieser Form in der üblichen Weise und im gleichen Umfang getrocknet werden, bevor sie durch Erzeugen einer geringfügigen, jedoch ausreichenden Fadenzugkraft wieder annähernd geradlinig ausgestreckt und in dieser Form zu einem Strang aufgewickelt werden.

Mit großem Erfolg konnten mit dem erfindungsgemäßen Verfahren Bündel aus solchen, zuvor genannten, Hohlfäden hergestellt werden, die eine im Bereich von 3 µm bis 20 µm liegende Wandstärke und einen im Bereich von µm 100 bis 300 µm liegenden Innendurchmesser, also beispielsweise eine Wandstärke von ungefähr 5 µm oder 8 µm und einen Innendurchmesser von ungefähr 150 µm oder ungefähr 200 µm hatten.

Hohlfadenbündel aus erfindungsgemäß gewellten für die Blutdialyse geeigneten frischgesponnenen Hohlfäden beispielsweise zeigten eine um 75 bis 100 % erhöhte Harnstoff-Clearence gegenüber solchen aus nicht gewellten Hohlfäden.

Das erfindungsgemäße Verfahren gestattet es somit erstmals, Hohlfadenbündel mit den geforderten Stoff- und Wärmeübertragungsleistungen herzustellen, ohne daß der umständliche, aber bisher unumgängliche Umweg über die Herstellung von Hohlfadenspulen als Ausgangsbasis für die Bündelherstellung begangen werden muß. Die Möglichkeit, sowohl im Originalzustand belassene als auch beliebig intensiv gewellte Hohlfäden zu Bündeln verarbeiten zu können, bedeutet, daß das erfindungsgemäße Verfahren praktisch unbegrenzt auf alle Bedürfnisse und betrieblichen Erfordernisse zugeschnitten werden kann und im Rahmen des ihm zugrundeliegenden Erfindungsgedankens weiter ausgestaltungsfähig ist.

Die Erhöhung der Wärme- und Stoffübertragungsleistung von Hohlfadenbündeln aus erfindungsgemäß gewellten Hohlfäden gegenüber erfindungsgemäß hergestellten Hohlfadenbündeln aus nicht gewellten Hohlfäden läßt sich zumindest qualitativ durch Messen des in den Hohlfadenbündeln beim Durchströmen derselben mit einem Fluid auftretenden Druckverlustes feststellen. Zu diesem Zweck wird ein erfindungsgemäß hergestelltes Hohlfadenbündel aus gewellten Hohlfäden in einem entsprechend bemessenen, beispielsweise rohrförmigen, Gehäuse angeordnet, welches im Bereich der beiden Enden des Hohlfadenbündels mit Druckmeßeinrichtungen verbunden ist. Läßt man dieses Hohlfadenbündel nunmehr beispielsweise von Wasser durchströmen, so läßt sich der von dem zeitlichen Volumenstrom abhängige im Hohlfadenbündel auftretende Druckverlust ermitteln. Ordnet man in dasselbe oder ein gleiches Gehäuse ein erfindungsgemäß hergestelltes Bündel aus nicht gewellten Hohlfäden an und führt man die gleichen Messungen mit diesem Hohlfadenbündel durch, so wird man im allgemeinen feststellen, daß ein Hohlfadenbündel aus erfindungsgemäß gewellten Hohlfäden einen höheren Druckverlust bewirkt als ein solches aus nicht gewellten Hohlfäden. Zur besseren Sichtbarmachung des Unterschiedes empfiehlt es sich, gegebenenfalls sehr lange Hohlfadenbündel für die beispielshalber angegebene Messung zu verwenden. Außerdem können die Hohlfäden auf einer Seite verschlossen werden, so daß ein Durchströmen derselben nicht stattfindet, sondern nur ein Umströmen, so daß auf diese Weise der nur beim Umströmen der Hohlfäden in Längsrichtung auftretende Druckverlust wirksam wird.

Beispielsweise wurden Vergleichsmessungen an einem Hohlfadenbündel aus frischgesponnenen durch Regenerieren von Cellulose aus einer Kupferammonium-Cellulose-Lösung gewonnenen ungewellten Hohlfäden und einem solchen aus erfindungsgemäß gewellten Hohlfäden durchgeführt. Die Länge der Hohlfadenbündel betrug 250 mm und bestand aus 1000 Hohlfäden mit einem Außendurchmesser von ungefähr 216 µm und einem Innendurchmesser von ungefähr 200 µm, woraus sich eine Wandstärke der Hohlfäden von ungefähr 8 µm, gemessen im getrockneten Zustand, ergibt. Jedes Hohlfadenbündel war in einem Rohr mit einem Innendurchmesser von 14 mm angeordnet. Die Hohlfäden waren verschlossen, so daß der nur beim Umströmen der Hohlfäden auftretende Druckverlust gemessen wurde. Die Hohlfäden im 2. Bündel hatten eine zick-zackförmige Wellung mit einer Wellenlänge von ungefähr 20 mm und einer Amplitude von ungefähr 1 mm.

Die Hohlfadenbündel wurden in Längsrichtung mit Wasser durchströmt, welches eine Temperatur von 37°C hatte. Die Durchflußmenge betrug 2,4 l/Std. Unter diesen Bedingungen betrug der Druckverlust in dem Hohlfadenbündel aus nicht gewellten Hohlfäden ungefähr 4 mm Hg (5,3 mbar) während in dem Hohlfadenbündel aus erfindungsgemäß gewellten Hohlfäden ein Druckverlust von ungefähr 26 mm Hg (34,7 mbar) auftrat. Die Harnstoff-Clearance für das Bündel aus nicht gewellten Hohlfäden betrug 95 ml/min, die für das Bündel aus erfindungsgemäß gewellten Hohlfäden 163 ml/min. Wenn auch die Clearance für das Bündel aus erfindungsgemäß gewellten Hohlfäden nicht in demselben Maß anstieg, wie der Druckverlust, verglichen mit dem Bündel aus nicht gewellten Hohlfäden, so zeigt dieser Versuch doch sehr deutlich, daß ein erfindungsgemäß hergestelltes und gewelltes Hohlfadenbündel in Verbindung mit einem höheren Druckverlust auch zu einer wesentlich höheren Harnstoff-Clearance als ein Bündel aus ungewellten erfindungsgemäß hergestellten Hohlfäden führt.

Die erfindungsgemäße Vorrichtung zur Bildung eines Hohlfadenstranges weist folgende Merkmale auf: Eine bewegbare Fadenführungseinrichtung, wenigstens vier paarweise angeordnete Fadenaufnahmeorgane, die bewegbar derart angeordnet sind, daß sich wenigstens zwei zweite Fadenaufnahmeorgane zwangsläufig außerhalb des von der Fadenführungseinrichtung überstreichbaren Bewicklungsbereiches in Bereitstellung befinden, solange wenigstens zwei erste Fadenaufnahmeorgane in dem genannten Bewicklungsbereich in Arbeitsstellung gebracht worden sind, und daß wenigsten zwei zweite Fadenaufnahmeorgane ohne Beeinträchtigung oder Unterbrechung des Bewicklungsvorganges zwangsläufig in die genannte Arbeitsstellung gebracht werden, wenn die ersten Fadenaufnahmeorgane aus dem Bewicklungsbereich entfernt werden.

In Ausgestaltung kann die erfindungsgemäße Vorrichtung beliebig viele Gruppen aus beliebig vielen, gegebenenfalls unterschiedlich vielen, Fadenaufnahmeorganen aufweisen. Zum Zerschneiden des Hohlfadenstranges in einzelne Bündel und zum Einbinden oder Verpacken der Hohlfadenbündel können zusätzlich entsprechende Einrichtungen in geeigneter Weise angeordnet sein.

Die Fadenführungseinrichtung kann auf einer Kreisbahn oder einer langgezogenen in sich geschlossenen, beispielsweise elliptischen, Bahn bewegbar oder auf einer geradlinigen oder einer kreisbogenförmigen Bahn hin- und herbewegbar angeordnet sein, wobei bei einer hin- und hergehenden Bewegung der Fadenführungseinrichtung die sich in Arbeitsstellung befindenden Fadenaufnahmeorgane eine im wesentlichen senkrecht zu der Bewegungsbahn der Fadenführungseinrichtung gerichtete vor- und zurückgehende Bewegung ausführen, und zwar jedes Mal, wenn die Fadenführungseinrichtung eine ihrer beiden Endlagen erreicht hat, und zwar so, daß die Fadenaufnahmeorgane dabei die Bahn der Fadenführungseinrichtung kreuzen.

Die erfindungsgemäße Vorrichtung zum Herstellen von Bündeln gewellter Hohlfäden weist darüber hinaus folgende merkmale auf: Eine Einrichtung, mit welcher die Hohlfäden zwangsläufig in eine Wellenform, eine Zick-Zack-Form u.s.w. übergeführt werden, die vor der den Hohlfadenstrang bildenden Einrichtung angeordnet sein kann und mit derselben Geschwindigkeit bewegbar ist, mit der die Hohlfäden dieser Wickeleinrichtung zugeführt werden, sowie eine Fixierzone, in welcher die den Hohlfäden aufgezwungene Form bleibend fixiert wird.

Die Erfindung wird nun anhand der Zeichnung näher erläutert. Es zeigt in jeweils vereinfachter schematischer Darstellungsweise:

Fig. 1 eine Ausführungsform der erfindungsgemäßen Vorrichtung zum Herstellen von Hohlfadensträngen mit insgesamt vier paarweise angeordneten Fadenaufnahmeorganen,

Fig. 2 die Draufsicht auf die in Fig. 1 dargestellte Vorrichtung,

Fig. 3 eine Ausführungsform der erfindungsgemäßen Vorrichtung zum Herstellen von Hohlfadensträngen mit insgesamt acht paarweise angeordneten Fadenaufnahmeorganen,

Fig. 4 die Seitenansicht einer Ausführungsform der erfindungsgemäßen Vorrichtung zum Herstellen von Hohlfadensträngen mit insgesamt sechs paarweise angeordneten Fadenaufnahmeorganen,

Fig. 5 die Vorderansicht der in Fig. 4 dargestellten Vorrichtung,

Fig. 6 die Draufsicht der in Fig. 4 und Fig. 5 dargestellten Vorrichtung,

Fig. 7 die Draufsicht auf eine Ausführungsform der erfindungsgemäßen Vorrichtung zum Herstellen von Hohlfadensträngen mit insgesamt zwölf Fadenaufnahmeorganen, die in zwei Gruppen von sechs so angeordnet sind, daß sie ein regelmäßiges Sechseck bilden,

Fig. 8a bis 8d verschiedene Möglichkeiten, ausgehend von der in Fig. 7 dargestellten Anordnung der Fadenaufnahmeorgane zu unterschiedlichen Polygonformen für den Hohlfadenstrang und unterschiedlichen Längen für die daraus hergestellten Hohlfadenbündel zu gelangen,

Fig. 9 eine Ausführungsform der erfindungsgemäßen Vorrichtung zum Herstellen von Hohlfadensträngen mit einer Vielzahl paarweise auf einem endlosen band- oder kettenförmigen Träger angeordneter Fadenaufnahmeorgane und einer Fadenführungseinrichtung, die auf einer langgezogenen in sich geschlossenen Bahn bewegbar angeordnet ist,

Fig. 10 die Draufsicht auf die in Fig. 9 dargestellte Vorrichtung,

Fig. 11 eine Ausführungsform der erfindungsgemäßen Vorrichtung zum Herstellen von Hohlfadensträngen mit einer Vielzahl paarweise auf einem endlosen band- oder kettenförmigen Träger angeordneter Fadenaufnahmeorgane und einer Fadenführungseinrichtung, die auf einer geradlinigen Bahn hin- und herbewegbar angeordnet ist,

Fig. 12 die Vorderansicht der in Fig. 11 dargestellten Vorrichtung,

Fig. 13 eine Ausführungsform der erfindungsgemäßen Vorrichtung zum Herstellen von Hohlfadensträngen mit paarweise angeordneten Fadenaufnahmeorganen, bei welcher die Fadenführungseinrichtung auf einer kreisbogenförmigen Bahn hin- und herbewegbar angeordnet ist,

Fig. 14 eine Einrichtung, die den Transport erfindungsgemäß hergestellter Hohlfadenstränge erleichtert,

Fig. 15 eine Ausführungsform der erfindungsgemäßen Vorrichtung zum kontinuierlichen Wellen einzelner oder einer Vielzahl von Hohlfäden,

Fig. 16 einen vergrößerten Ausschnitt aus Fig. 15,

Fig. 17 in gegenüber Fig. 15 vergrößertem Maßstab einen Ausschnitt der Längsansicht des mittleren Bereiches der in Fig. 15 dargestellten Vorrichtung, in welchem das Wellen der Hohlfäden stattfindet,

Fig. 18 einen Ausschnitt einer Ausführungsform der erfindungsgemäßen Vorrichtung zum Wellen von Hohlfäden, mit welcher eine intensivere Wellung der Hohlfäden erreichbar ist,

Fig. 19 die Längsansicht des Bereiches der in Fig. 18 dargestellten Vorrichtung, in welcher das Wellen der Hohlfäden abgeschlossen ist,

Fig. 20 bis 26 mögliche Ausgestaltungsformen der den Hohlfäden die gewünschte Form der Wellung aufzwingenden stabförmigen Glieder für Vorrichtungen gemäß den Fig. 15 bis 19,

Fig. 27 eine Ausführungsform der erfindungsgemäßen Vorrichtung zum kontinuierlichen Wellen einzelner oder einer Vielzahl von Hohlfäden, wobei die den Hohlfäden aufgezwungene Form der Wellung ungefähr der Form einer Schraubenfeder entspricht,

Fig. 28 die Seitenansicht der in Fig. 27 dargestellten Vorrichtung,

Fig. 29 eine Einrichtung zum unterschiedlich starken Auslenken erfindungsgemäß gewellter Hohlfäden, wodurch eine Phasenverschiebung zwischen den Hohlfäden im Hohlfadenstrang bzw. Hohlfadenbündel erreicht wird,

Fig. 30 eine Ausführungsform der erfindungsgemäßen Vorrichtung zum kontinuierlichen Wellen von Hohlfäden in Form eines gewindestiftähnlichen Stabes, über welchen die Hohlfäden zum Zwecke der Wellung gezogen werden und dadurch eine schraubenfederförmige Wellung erhalten,

Fig. 31 eine Möglichkeit, erfindungsgemäß hergestellte Hohlfadenbündel erfindungsgemäß zu wellen, wobei das Hohlfadenbündel schraubenfederförmig um einen Rundstab gewickelt und in dieser Form einem Fixierverfahren unterworfen wird,

Fig. 32 eine weitere Möglichkeit, erfindungsgemäß hergestellte Hohlfäden erfindungsgemäß zu wellen, und zwar indem die Hohlfäden durch einen rohrförmigen Körper schraubenfederförmig verformt und in dieser Form einer Fixierbehandlung unterworfen werden,

Fig. 33 eine besonders bevorzugte Ausführungsform der erfindungsgemäßen Vorrichtung zum Herstellen von Hohlfadensträngen in Form eines regelmäßigen in einer horizontalen Ebene liegenden Sechseckes,

Fig. 34 die Seitenansicht der in Fig. 33 dargestellten Vorrichtung in teilweise geschnittener Darstellungsweise,

Fig. 35 eine erfindungsgemäße Einrichtung zum Verpacken von Hohlfadenbündeln,

Fig. 36 die in Fig. 35 dargestellte Vorrichtung beim Verpacken eines Hohlfadenbündels,

Fig. 37 bis 40 erfindungsgemäße Hohlfadenbündel,

Fig. 41 und 42 Fadenführungseinrichtungen.

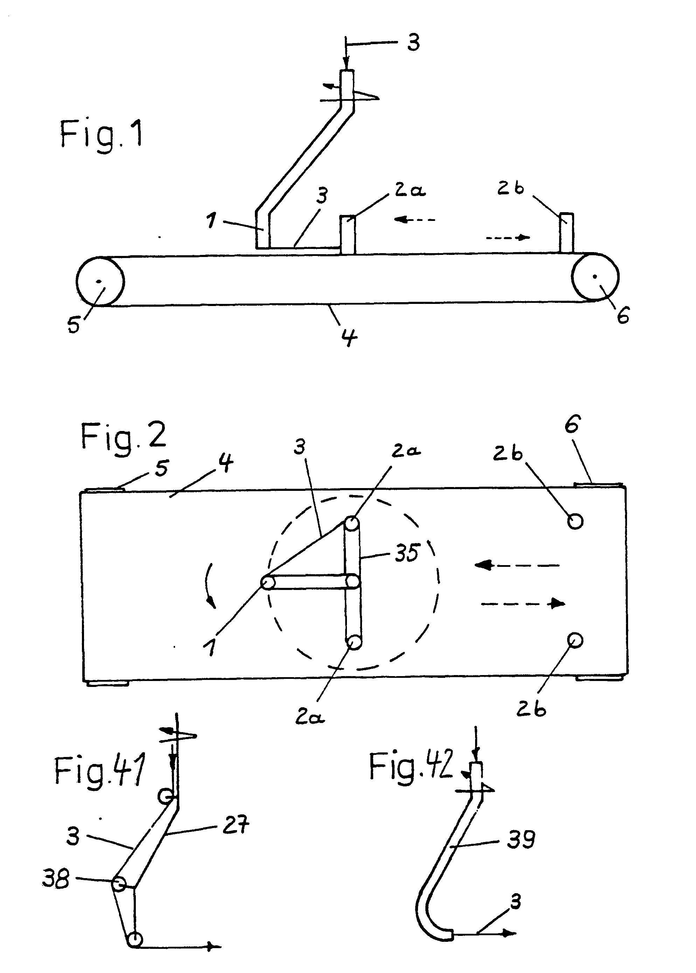

In Fig. 1 und 2 sind folgende Teile einer Ausführungsform der erfindungsgemäßen Vorrichtung zum Herstellen von Hohlfadensträngen dargestellt: Die Fadenführungseinrichtung 1, ein erstes Paar Fadenaufnahmeorgane 2a, ein zweites Paar Fadenaufnahmeorgane 2b, die beide auf einem endlosen Transportband 4 angeordnet sind, welches um die beiden Rollen 5, 6 geführt ist, durch diese straff gespannt gehalten wird und durch Drehung dieser Rollen 5, 6 in Bewegung gesetzt wird. Die Fadenführungseinrichtung 1 rotiert in der durch die Pfeile dargestellten Drehrichtung, wodurch der Hohlfaden (bzw. die Hohlfäden 3) um die beiden Fadenaufnahmeorgane 2a zu einem Strang 35 aufgewickelt wird. Nach Erreichen der gewünschten Strangstärke werden die Fadenaufnahmeorgane 2a zusammen mit dem Hohlfadenstrang 35 aus dem Bewicklungsbereich der Fadenführungseinrichtung 1 fortbewegt, und zwar in der Darstellung nach links, wodurch die Fadenaufnahmeorgane 2b zwangsläufig in den Bewicklungsbereich und dort in die richtige Arbeitsstellung, wie zuvor die beiden Fadenaufnahmeorgane 2a, gebracht werden. In dieser nicht dargestellten Position kann der Hohlfadenstrang 35 von den Fadenaufnahmeorganen 2a abgenommen oder zunächst in Bündel zerschnitten werden, während durch Bewickeln der beiden Fadenaufnahmeorgane 2b der nächste Hohlfadenstrang gebildet wird. Nach Erreichen der gewünschten Stärke wird dieser Strang nun nach rechts aus dem Bewicklungsbereich verfahren, wodurch die Fadenaufnahmeorgane 2a zwangsläufig wieder in den Bewicklungsbereich und dort in die gewünschte Arbeitsstellung gebracht werden und ihre Bewicklung von neuem beginnt. Die geschilderten Arbeitsschritte können beliebig häufig wiederholt werden.

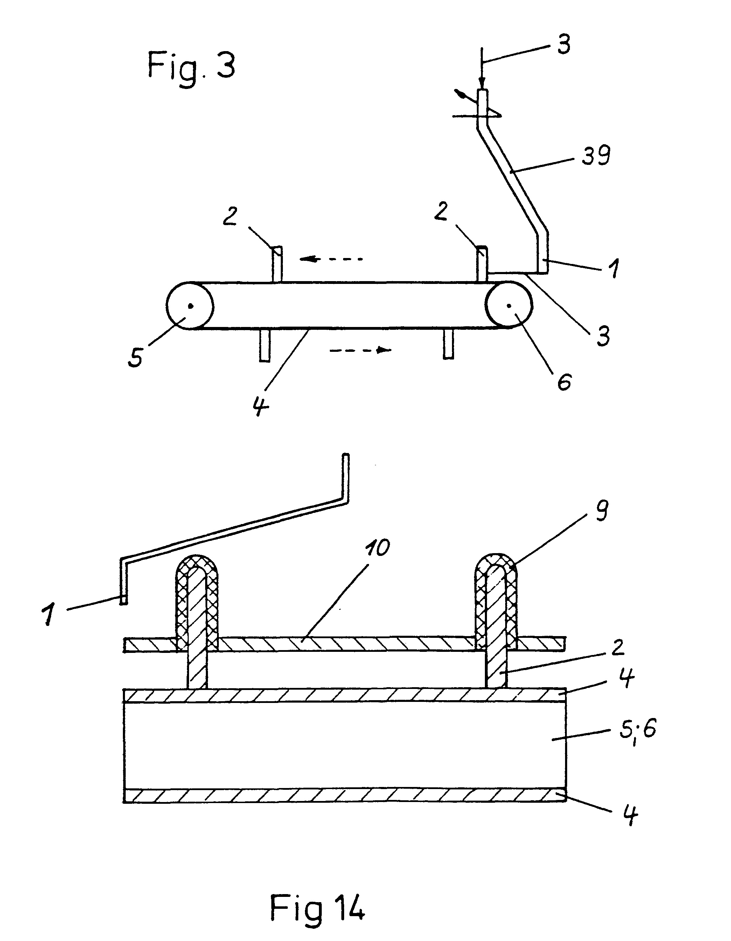

Bei der in Fig. 3 dargestellten Ausführungsform der erfindungsgemäßen Vorrichtung zum Herstellen von Hohlfadensträngen sind vier Paare, also insgesamt acht Fadenaufnahmeorgane 2 auf einem Transportband 4 angeordnet. Bei dieser Ausführungsform erfolgt das Wegführen der fertigen Hohlfadenstränge und das Heranführen unbewickelter Fadenaufnahmeorgane 2 durch taktweises Drehen der Rollen 5, 6 stets in dieselbe durch den gestrichelten Pfeil angedeutete Richtung. Die Drehung erfolgt dabei nur so lange, bis das nachfolgende Paar Fadenaufnahmeorgane 2 in die richtige Arbeitsstellung unterhalb der Fadenführungseinrichtung 1 gebracht worden ist.

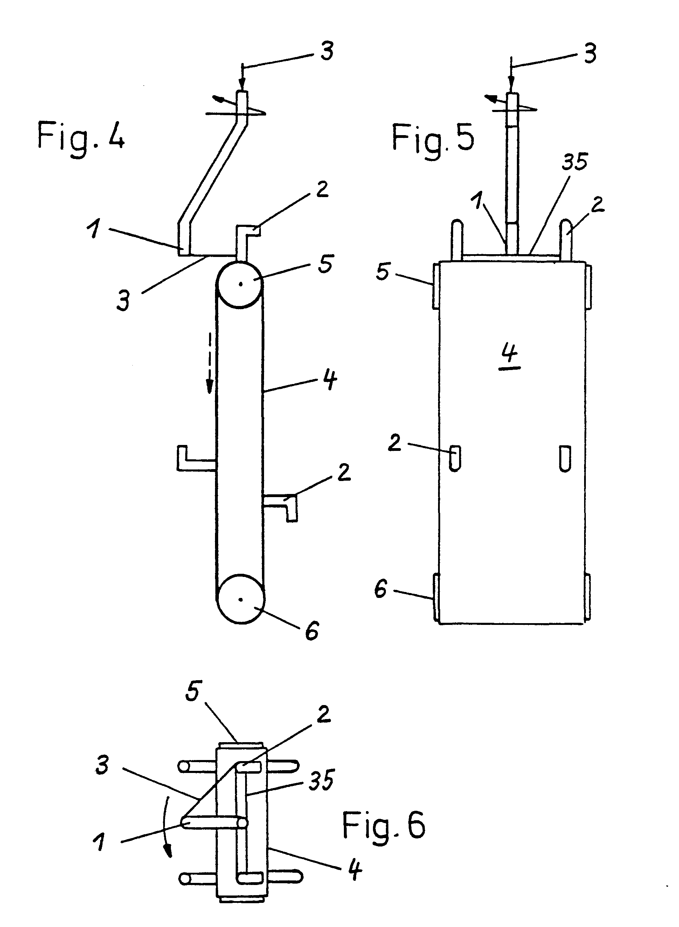

Die Wirkungsweise der in den Fig. 4, 5 und 6 dargestellten Ausführungsform der erfindungsgemäßen Vorrichtung zum Herstellen von Hohlfadensträngen ergibt sich aufgrund der Beschreibung der Fig. 1 bis 3 von selbst, zumal die dort dargestellten Teile auch die ihrer Bedeutung entsprechenden Positionszahlen haben, wie sie in den Fig. 1 bis 3 zu finden sind. Der einzige Unterschied besteht lediglich darin, daß die Rolle 6 für das Transportband 4 unterhalb der Rolle 5 angeordnet ist und das Transportband 4 somit senkrecht angeordnet ist und daß die sechs in drei Paaren angeordneten Fadenaufnahmeorgane 2 hakenförmig ausgebildet sind, wodurch ein Abrutschen des fertigen Hohlfadenstranges 35 bei seiner weiteren Verarbeitung vermieden wird.

Die mit den in den Fig. 1 bis 6 dargestellten Vorrichtungen herstellbaren Hohlfadenstränge haben die Form eines langgestreckten O. Auch diese Form fällt im Rahmen der vorliegenden Erfindung unter den Begriff Polygon bzw. polygonal, da diese Form auch als "Zweieck" bezeichnet werden könnte.

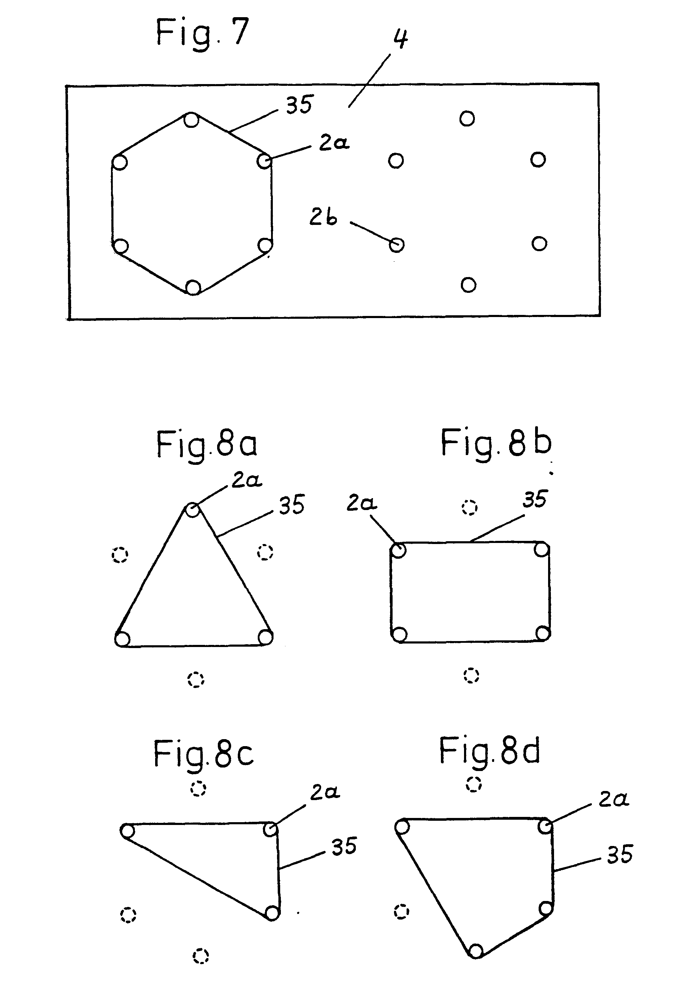

Bei der in Fig. 7 dargestellten Ausführungsform der erfindungsgemäßen Vorrichtung zum Herstellen von Hohlfadensträngen 35 sind sechs Fadenaufnahmeorgane 2a und sechs Fadenaufnahmeorgane 2b je ein regelmäßiges Sechseck bildend auf einem Transportband 4 angeordnet. Die übrigen Teile dieser Ausführungsform, daß heißt die Fadenführungseinrichtung 1 und die Rollen 5, 6 sind hierbei nicht dargestellt. Durch Umwickeln der sechs Fadenaufnahmeorgane 2a bzw. 2b mit einem oder mehreren Hohlfäden 3 wird ein Hohlfadenstrang 35 gebildet, der im wesentlichen die Form eines regelmäßigen Sechseckes hat. Aus einem solchen Strang 35 können beispielsweise sechs Hohlfadenbündel 33 gleicher Länge herausgeschnitten werden, indem die Schnittstellen in die Bereiche gelegt werden, in denen die Hohlfäden noch nicht durch die Fadenaufnahmeorgane 2a bzw. 2b umgebogen sind, so daß sich eine Bündellänge ergibt, die nur geringfügig kleiner ist als der Mittenabstand zweier benachbarter Fadenaufnahmeorgane 2a bzw. 2b. Im übrigen entspricht die Arbeitsweise dieser Ausführungsform derjenigen der in den Fig. 1 und 2 dargestellten und oben ausführlich beschriebenen Vorrichtung.

Durch Entfernen von Fadenaufnahmeorganen 2a bzw. 2b bei der in Fig. 7 dargestellten Ausführungsform der erfindungsgemäßen Vorrichtung und Umwickeln der nicht entfernten Fadenaufnahmeorgane 2a bzw. 2b erhält man einen Hohlfadenstrang 35, der in Draufsicht betrachtet die Form der unterschiedlichsten Polygone haben kann, wie in den Figuren 8a bis 8d beispielshalber dargestellt, also beispielsweise die Form eines gleichseitigen Dreiecks (Fig. 8a), eines Rechtecks (Fig. 8b) eines rechtswinkligen Dreiecks mit drei unterschiedlich langen Seiten (Fig. 8c) oder eines unregelmäßigen Vierecks, bei welchem je zwei Seiten gleiche Länge haben. Auf diese Weise lassen sich Hohlfadenbündel unterschiedlicher Länge gleichzeitig herstellen, wobei die Länge der einzelnen Bündel im wesentlichen der Länge der einzelnen Seiten der jeweils gewählten Polygone entspricht. Werden statt sechs beispielsweise zwölf Fadenaufnahmeorgane 2a; 2b so angeordnet, daß sie ein regelmäßiges Zwölfeck bilden, so ergeben sich durch Entfernen einzelner oder mehrerer Fadenaufnahmeorgane noch weit mehr Variationsmöglichkeiten, Hohlfadenbündel unterschiedlicher Länge gleichzeitig herstellen zu können. Zudem können Fadenaufnahmeorgane auch in unterschiedlichen Polygonen angeordnet und nacheinander zum Bewickeln bereitgestellt werden.

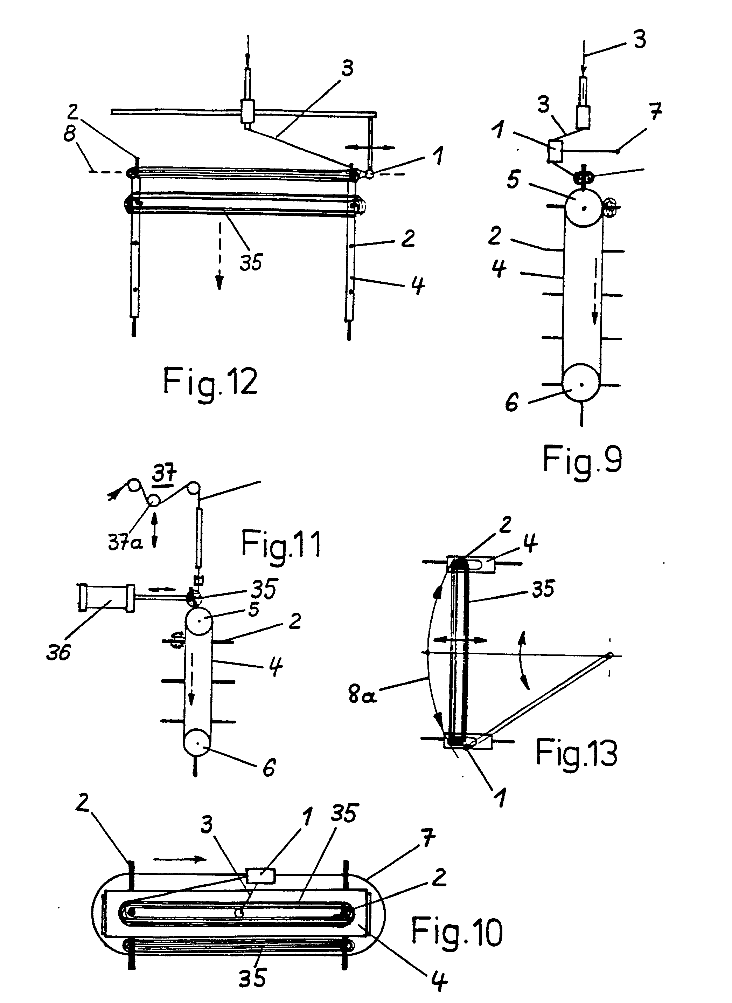

Die Wirkungsweise der in den Fig. 9 und 10 dargestellten Ausführungsform der erfindungsgemäßen Vorrichtung zum Herstellen von Hohlfadensträngen ergibt sich aus dem vorher Gesagten von selbst, wobei ein Unterschied lediglich darin besteht, daß bei dieser Ausführungsform die Fadenführungseinrichtung 1 auf einer langgezogenen in sich geschlossenen Umlaufbahn 7 bewegbar angeordnet ist. Diese könnte beispielsweise aber auch die Form einer Ellipse haben.

Bei der in Fig. 11 und 12 dargestellten Ausführungsform der erfindungsgemäßen Vorrichtung zum Herstellen von Hohlfadenbündeln ist die Fadenführungseinrichtung 1 auf einer geradlinigen Bahn 8 hin- und herbewegbar angeordnet. Zu diesem Zweck müssen die Fadenaufnahmeorgane 2 zumindest in der Arbeitsstellung, d.h. während des Bewickelns schwenkbar angeordnet sein, und zwar derart, daß sie bei Erreichen der Fadenführungseinrichtung 1 in jeder der beiden Endlagen ihrer Bewegungsbahn 8 in die entgegengesetzte Position geschwenkt werden können. Auf diese Weise wird dann auch bei dieser Art der Bewegung der Fadenführungseinrichtung 1 ein Umwickeln der beiden sich im Bewicklungsbereich befindenden Fadenaufnahmeorgane 2 möglich. Das Schwenken der beiden zu bewickelnden Aufnahmeorgane 2 geschieht dabei immer senkrecht zu der und in Richtung auf die von der Fadenführungseinrichtung 1 beschriebene Bahn 8, wobei die Bahn 8 dabei jedesmal gekreuzt wird. Das Hin- und Herschwenken der zu bewickelnden Fadenaufnahmeorgane 2 kann beispielsweise mit Hilfe eines pneumatisch, hydraulisch oder magnetisch arbeitenden Hubzylinders 36, eines Kurbelantriebes oder dergl. erfolgen. Lediglich beim taktweise erfolgenden Weitertransport der Fadenaufnahmeorgane 2 muß diese Schwenkeinrichtung vorübergehend außer Eingriff mit den Fadenaufnahmeorganen 2 gebracht werden. In Fig. 11 ist weiterhin eine als Speicher wirkende sogenannte Tänzer-Rollen-Steuereinrichtung 37 dargestellt, die auch bei leicht schwankender Fadenzulieferung oder -abnahme durch die Fadenführungseinrichtung 1 eine verhältnismäßig gleichbleibende Fadenspannung gewährleistet. Solche Schwankungen werden durch Auf- und Abbewegen ("Tanzen") der Rolle 37a ausgeglichen. Eine solche Einrichtung 37 kann auch in einem Regelkreis so angeordnet sein, daß sie die Regelung der Drehzahl bzw. Geschwindigkeit der Fadenführungseinrichtung 1 bewirkt, um die Fadenabnahme durch die Fadenführungseinrichtung 1 auf die Fadenzuliefermenge abzustimmen. Außerdem kann eine solche oder eine andere dieselbe Aufgabe erfüllende Einrichtung 37 auch bei allen anderen in den Figuren dargestellten Ausführungsformen der erfindungsgemäßen Vorrichtung angeordnet werden. Eine solche Einrichtung bewirkt nämlich in vorteilhafter Weise das störungsfreie Auswechseln bewickelter gegen unbewickelte Fadenaufnahmeorgane 2 beim taktweisen Vorschub.

Statt einer geradlinigen Hin- und Herbewegung kann die Fadenführungseinrichtung 1 eine solche Hin- und Herbewegung auch auf einer kreisbogenförmigen Bahn 8a ausführen, wie in Fig. 13 dargestellt. Das Hin- und Herschwenken der zu bewickelnden Fadenaufnahmeorgane 2 erfolgt dabei in der gleichen Weise, wie bei der Beschreibung der in den Figuren 11 und 12 dargestellten Vorrichtung erläutert.

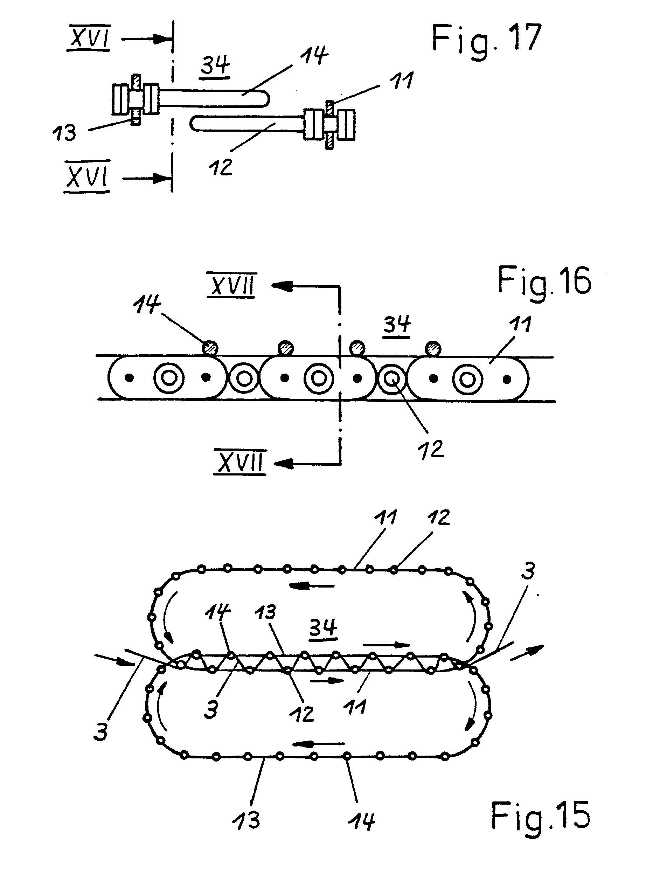

In Fig. 14 ist eine Einrichtung 9; 10 dargestellt, mit der das Abheben eines fertigen Hohlfadenstranges (nicht dargestellt) von den Fadenaufnahmeorganen 2 wesentlich erleichtert wird. Diese vor dem Bewickeln auf die Fadenaufnahmeorgane 2 aufgesteckte Einrichtung 9, 10 kann nach dem Bewickeln zusammen mit dem Hohlfadenstrang abgehoben und wegtransportiert werden. Durch den Abstandshalter 10, der stab- oder plattenförmig ausgebildet sein kann, werden die beiden geschlossenen rohrförmigen Teile 9 in ihrem gegenseitigen Abstand fixiert, so daß der Hohlfadenstrang beim Transport keine Veränderung hinsichtlich seiner Form erfährt. Eine solche Einrichtung, wie in Fig. 14 im Schnitt dargestellt, läßt sich auch bei aus mehr als zwei Fadenaufnahmeorganen 2 bestehenden Anordnungen verwenden, so daß auch beispielsweise sechseckige Hohlfadenstränge in dieser Form transportiert werden können.

Außer auf Bändern 4, Ketten od.dgl., wie in den Fig. 1 bis 14 dargestellt, können die Fadenaufnahmeorgane 2 gruppen- oder paarweise auch auf einer auch ringförmig ausgebildeten Scheibe oder Platte angeordnet sein, die taktweise um ihre Mittelachse drehbar angeordnet ist (Karusselprinzip). Bei Anordnung der Fadenaufnahmeorgane auf einer nicht bewegbar angeordneten Platte ist es möglich, wenn auch gegebenenfalls technisch aufwendiger, die Fadenführungseinrichtung insgesamt, also einschließlich ihrem Antrieb und weiterer Teile, taktweise von einer Gruppe Fadenaufnahmeorgane zur nächsten bewegbar anzuordnen. Bei auf einer drehbaren Platte angeordneten Fadenaufnahmeorganen 2 haben alle Gruppen oder Paare den gleichen Abstand von der Drehachse der Platte. Bei einer taktweise insgesamt bewegbar angeordneten Fadenführungseinrichtung kann die Anordnung der Gruppen oder Paare beliebig sein. Das Anlaufen der einzelnen Gruppen oder Paare kann dabei auch programmgesteuert erfolgen. Schließlich können die Fadenaufnahmeorgane 2 auch auf einem nur in einer Ebene liegenden taktweise bewegbaren Förderband angeordnet sein ähnlich den Förderbändern, wie sie in Flughäfen bei der Gepäckausgabe gebräuchlich sind.

Bei der in Fig. 15 dargestellten Ausführungsform der erfindungsgemäßen Vorrichtung zum kontinuierlichen Wellen von Hohlfäden 3 sind nur die wichtigsten Teile dargestellt, und zwar, eine obere endlose in Pfeilrichtung umlaufende. Rollenkette 11 mit gleichmäßig verteilt daran angeordneten Rundstäben 12 sowie eine untere endlose in Pfeilrichtung umlaufende Rollenkette 13 mit gleichmäßig verteilt daran angeordneten Rundstäben 14. Die Rundstäbe 12 sind in den gleichen gegenseitigen Abständen untereinander angeordnet wie die Rundstäbe 14. Die Anordnung der Rundstäbe 12 und 14 zueinander ist im übrigen aus den Fig. 15, 16 und 17 deutlich zu erkennen und braucht daher hier nicht noch im Detail beschrieben zu werden. Aus den genannten Fig. 15 bis 17 ergibt sich auch die Wirkungsweise dieser Vorrichtung von selbst, die darin besteht, einen oder mehrere Hohlfäden 3 in eine Zick-Zack-Form zu zwingen und ihn eine gewisse Zeit in dieser Form zu halten, so daß er in dieser Form in der Fixierzone 34 fixiert werden kann. Zur Vereinfachung wurden die den Umlauf der Rollenketten 11, 13 bewirkenden Antriebe sowie andere übliche Einrichtungen, beispielsweise Kettenführungen, Kettenumlenk- und -spannräder u.dgl., nicht dargestellt. Vollständigkeitshalber sei an dieser Stelle erwähnt, daß man eine wenn auch nur sehr schwache Wellung beispielsweise auch durch entsprechend angeordnete ohne gegenseitige Berührung ineinander eingreifende Zahnriemen oder ähnlich ausgestaltete Zahnbänder erreichen kann. Auch die in den Figuren 15 bis 17 dargestellte Vorrichtung arbeitet nach dem Prinzip ineinandergreifender Zähne beispielsweise eines Zahnradpaares, nur daß hierbei die Eingriffdauer durch entsprechende Bemessung der Länge der Rollenketten 11, 13 beliebig lange eingestellt werden kann und auch das Umbiegen der Hohlfäden 3 an den Rundstäben 12, 14 bei Auswahl geeigneter Durchmesser ohne Knicken erfolgt. Es versteht sich hierbei von selbst, daß anstelle der Rollenketten 11, 13 auch andere endlose umlaufende Mittel in Bandform, Riemenform od.dgl. verwendet werden können. Auch die einseitige Befestigung der Rundstäbe 12 bzw. 14, wie in Fig. 17 dargestellt, kann durch eine zweiseitige Befestigung mit Hilfe von je zwei Ketten 11, 13 ersetzt werden.

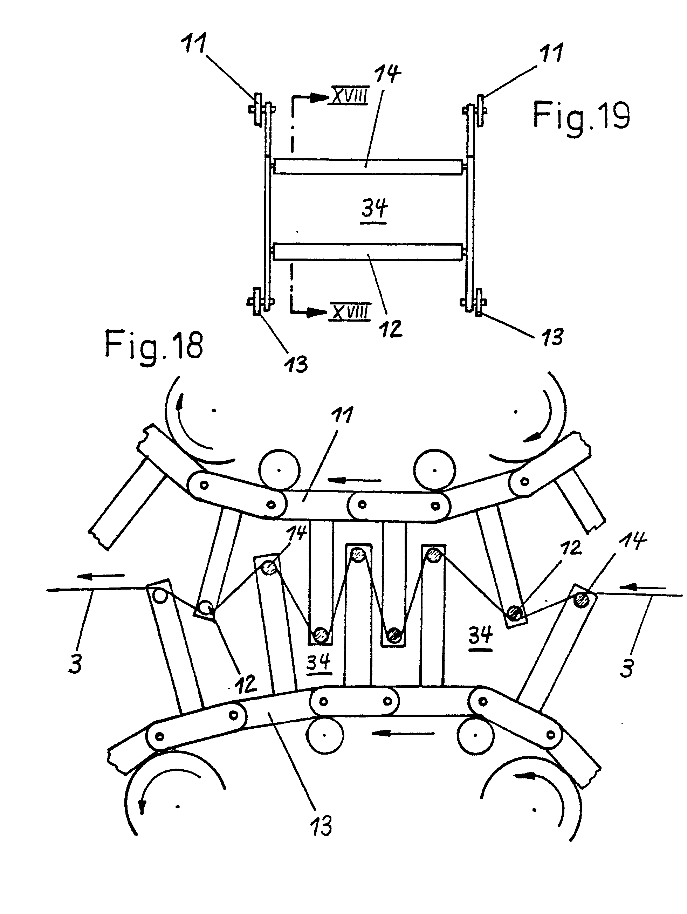

Eine solche zweiseitige Befestigung der Rundstäbe 12, 14 ist in den Fig. 18 und 19 dargestellt. Der Mittenabstand der Rundstäbe 12, 14 bei geradlinigem Verlauf der Kette 11, 13 ist hierbei geringer als die maximale Eingrifftiefe. Hierdurch ergibt sich eine intensive Wellung der Hohlfäden 3, da die Umschlingung der Rundstäbe 12, 14 durch die Hohlfäden 3 hierbei größer ist und die Hohlfäden 3 daher auf längeren Abschnitten gebogen und diese Biegungen in der Fixierzone 34 fixiert werden. Hierdurch ergibt sich auch eine größere Amplitude der Wellung, wobei diese beim Strecken der gewellten Hohlfäden 3 zu einer größeren Wellenlänge der Wellung führt.

Die in den Figuren 15 bis 19 dargestellten Ausführungsformen zeigen somit, wie man die Intensität und die Amplitude bzw. die Wellenlänge der Wellung der erfindungsgemäß gewellten Hohlfäden 3 festlegen kann.

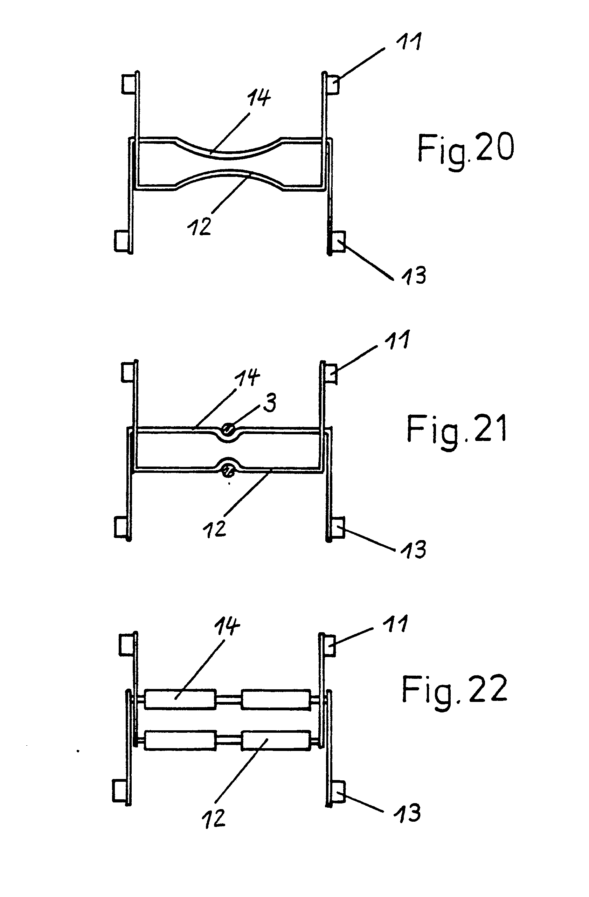

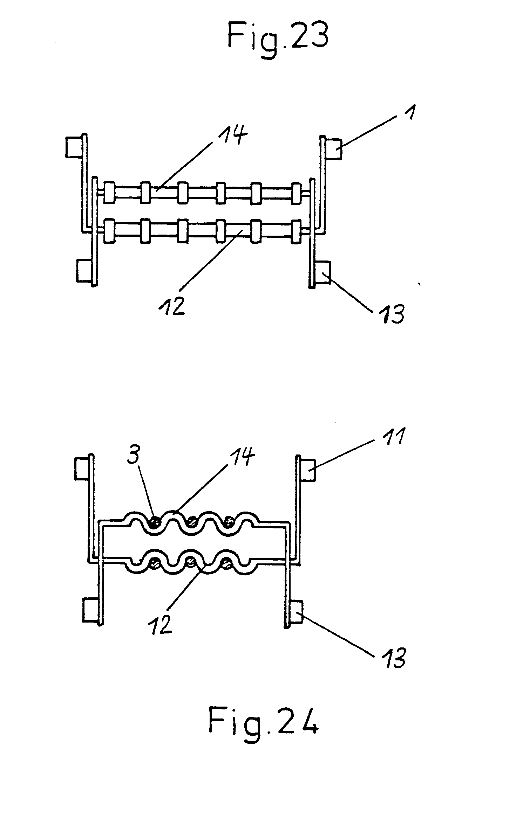

In den Fig. 20 bis 24 sind unterschiedliche Ausführungsformen der für die in den Fig. 15, 16 und 18 dargestellten Vorrichtungen verwendbaren Rundstäbe 12 bzw. 14 dargestellt, mit welchen eine bessere Führung bzw. Festlegung der Hohlfäden 3 einzeln oder in Kabeln oder Scharen beim Wellen in der Fixierzone 34 erreicht wird. Der Durchmesser von zum Wellen von Hohlfäden 3 geeigneten Rundstäben 12, 14 kann beispielsweise das 15- bis 20-fache des Hohlfadendurchmesser betragen, wenn dadurch ein Knicken der Hohlfäden 3 beim Wellen vermieden wird. So konnten Hohlfäden aus regenerierter Cellulose mit einem Durchmesser von 150 μm bzw. 200 μm mit 3 mm dicken Rundstäben bei einer im Bereich von 0 bis 5 mm liegenden Eingriffstiefe und einem Mittenabstand der Rundstäbe von ungefähr 9,5 mm ohne einzuknicken gewellt werden.

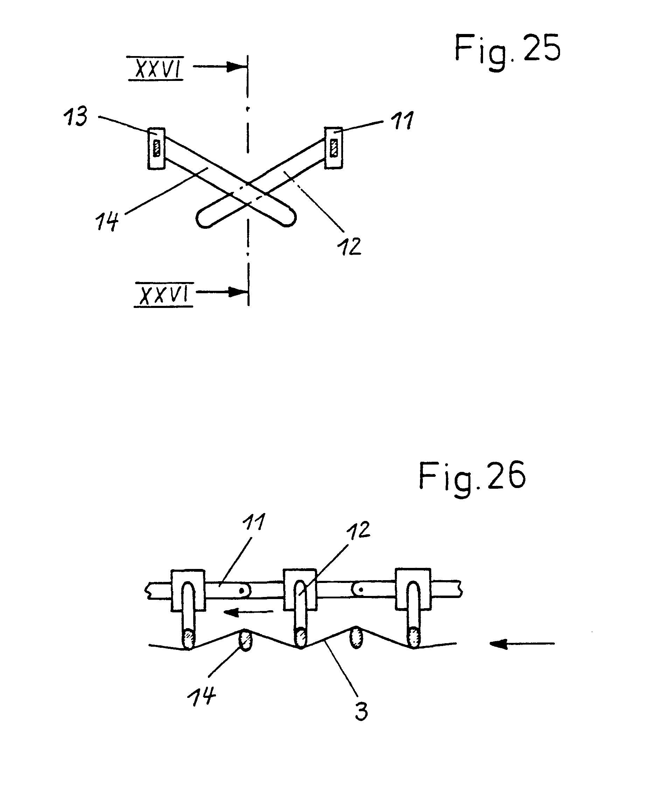

Bei der in den Fig. 25 und 26 dargestellten Anordnung der Rundstäbe 12, 14 werden die Hohlfäden 9 im wesentlichen in der Mitte geführt und gehalten, jedoch läßt sich hierdurch, wie aus Fig. 26 ersichtlich nur eine sehr schwache Wellung der Hohlfäden 3 erreichen, die jedoch gegebenenfalls von Vorteil und daher erwünscht sein kann.

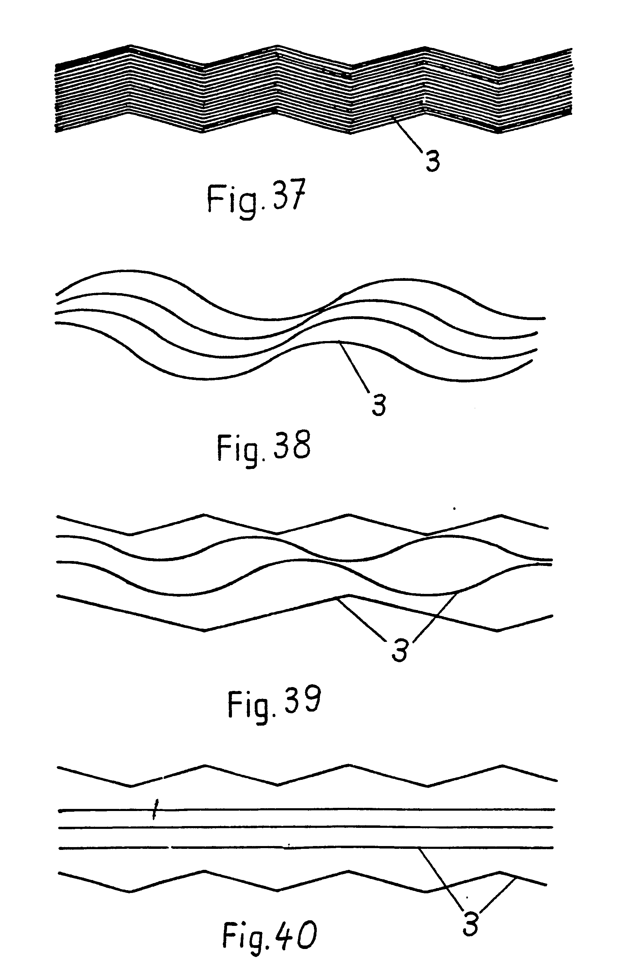

Durch unregelmäßiges oder lückenhaftes Anordnen der Rundstäbe 12, 14 kann den Hohlfäden 3 eine entsprechend unregelmäßige Wellung erteilt werden, oder es kann dadurch erreicht werden, daß die Hohlfäden 3 nur abschnittsweise gewellt werden. Die Rundstäbe 12, 14 können auch so angeordnet sein, daß sich abwechselnd unterschiedliche Eingriffstiefen ergeben, beispielsweise durch Kombination der Ausführungsformen nach Fig. 15 bis 17 und 18 und 19. Findet während des Wellens der Hohlfäden 3 ein Schrumpfen derselben statt, so kann es zweckmäßig sein, zum Vermeiden des Dehnens oder Brechens der Hohlfäden eine Anordnung zu wählen, bei der die Eingriffstiefe der Rundstäbe 12, 14 in Fadenlaufrichtung dem Schrumpf der Hohlfäden entsprechend abnimmt, Wird ein Teil der Hohlfäden an der Einrichtung zum Wellen vorbeigeführt, so wird ein Hohlfadenstrang bestehend aus gewellten und ungewellten Hohlfäden erhalten (s. Fig. 40).

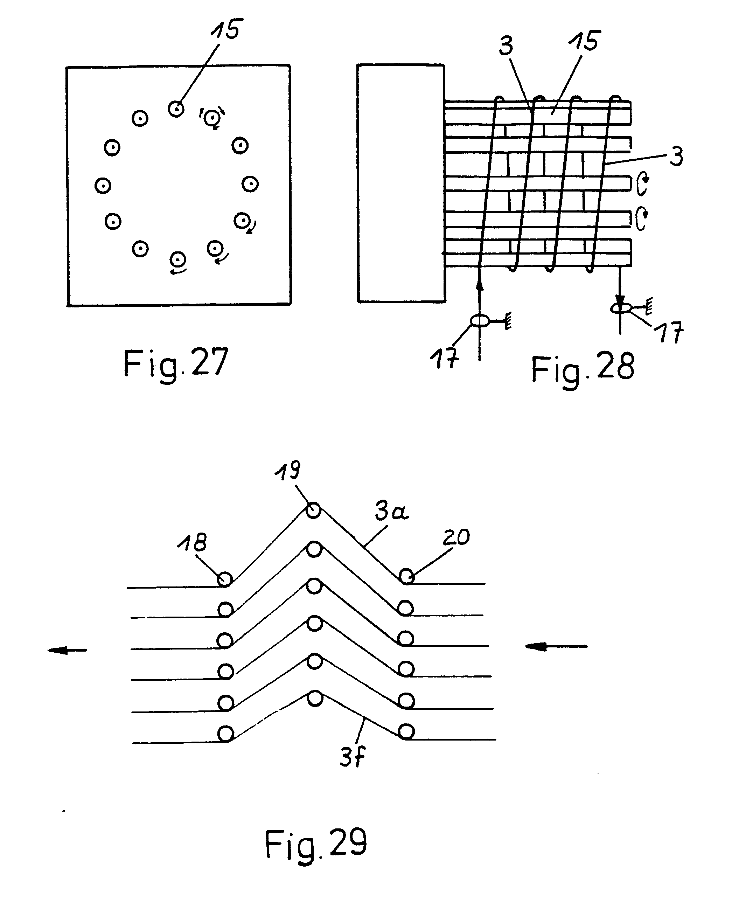

Die in den Fig. 27 und 28 dargestellte Ausführungsform der erfindungsgemäßen Vorrichtung zum kontinuierlichen Wellen von Hohlfäden 3 besteht aus einer Vielzahl auf einem Kreis gleichmäßig angeordneter um ihre Längsachse drehbarer Rundstäbe 15, um welche ein einzelner Hohlfaden 3 oder ein Hohlfadenkabel in mehrfachen Windungen herumgeführt werden kann und dabei vorübergehend die Form einer Schraubenfeder annimmt, so daß ihm auf diese Weise unter geeigneten Fixierbedingungen eine entsprechende Wellung erteilt werden kann. Der Transport der Hohlfäden 3 über die frei drehbaren oder auch angetriebenen Rundstäbe 15 erfolgt dabei allenfalls mit nur geringem seitlichen Schlupf, so daß auch diese Vorrichtung eine äußerst schonende Wellung von Hohlfäden ermöglicht. Die Fadenführer 17 bewirken dabei, daß der Auf- und Ablaufpunkt der Hohlfäden 3 festgelegt wird.

Fig. 29 zeigt die unterschiedlich starke Auslenkung gewellter Hohlfäden 3 zum Erreichen einer Phasenverschiebung der Wellung verschiedener Hohlfäden im Hohlfadenstrang bzw. Hohlfadenbündel. Zu diesem Zweck wird jeder Hohlfaden 3 zwischen den rundstabförmigen Fadenführern 18 und 20 durch einen rundstabförmigen Fadenführer 19 ausgelenkt. Die Fadenführer 18 und 20 sind in gleichen gegenseitigen Abständen angeordnet. Auch die Fadenführer 19 sind untereinander in gleichen Abständen angeordnet, jedoch ist der gegenseitige Abstand der Fadenführer 19 größer als der der Fadenführer 18 bzw. 20. Hierdurch ergibt sich für jeden Hohlfaden 3 eine unterschiedlich lange Laufstrecke zwischen dem Fadenführer 18 und dem Fadenführer 20. Das heißt, der obere Hohlfaden 3a hat den größten Weg zwischen dem Fadenführer 18 und dem Fadenführer 20 zurückzulegen, der untere Hohlfaden 3f den kürzesten. Durch entsprechende Abstimmung der gegenseitigen Abstände der Fadenführer 18 bzw. 20 und der gegenseitigen Abstände der Fadenführer 19 auf die Wellung der Hohlfäden 3 wird erreicht, daß alle erfindungsgemäß gewellten Hohlfäden 3 im fertigen Bündel mit einer, wenn auch gegebenenfalls nur geringen, Phasenverschiebung zueinander angeordnet sind (s. Fig. 38).

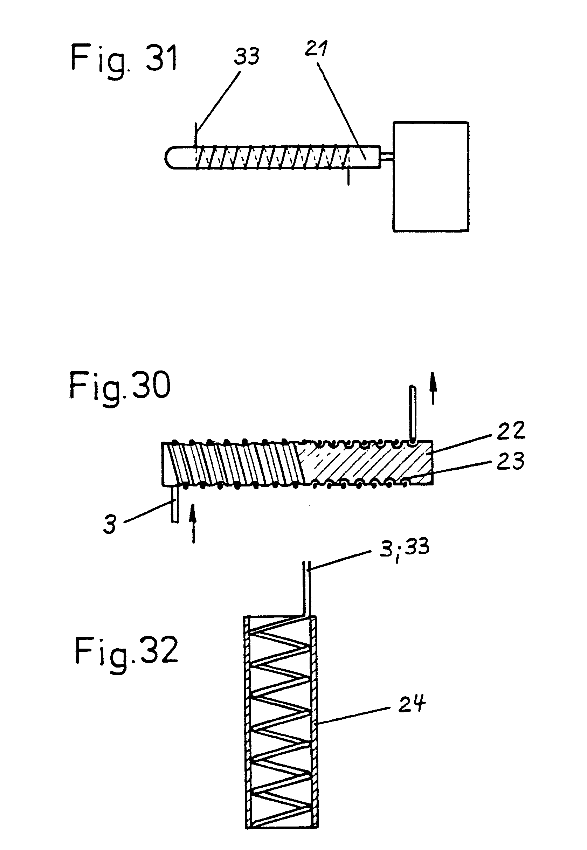

In Fig. 31 ist ein um einen Rundstab 21 gewickeltes Hohlfadenbündel 33 dargestellt, welches in dieser Anordnung einer geeigneten Fixierbehandlung unterworfen und auf diese Weise schraubenfederförmig (lockenförmig) erfindungsgemäß gewellt werden kann.

Hohlfäden mit ausreichender Festigkeit auch unter Fixierbedingungen können auch in der in Fig. 30 dargestellten Weise kontinuierlich erfindungsgemäß gewellt werden. Hierzu werden die Hohlfäden 3 fortlaufend durch die gewindeförmige Nut 23 eines Gewindestabes 22 gezogen. Die Hohlfäden 3 werden dabei in die Form einer Schraubenfeder übergeführt und in dieser Form fixiert und erhalten auf diese Weise eine entsprechende erfindungsgemäße Wellung.

Die in Fig. 32 dargestellte Ausführungsform des erfindungsgemäßen Verfahrens zum Wellen von Hohlfäden 3 eignet sich insbesondere für Hohlfäden 3 bzw. Hohlfadenbündel 33 bestimmter Länge, die zu diesem Zweck schraubenfederförmig in einem rohrförmigen Behälter 24 angeordnet und in dieser Anordnung einer Fixierbehandlung unterworfen werden. Hierbei ist es auch möglich, den dabei von den Hohlfäden 3 nicht ausgefüllten Innenraum während des Fixierens mit einem entsprechend bemessenen starren oder nachgiebigen Füllkörper (nicht dargestellt) auszufüllen, um auf diese Weise die Hohlfäden besser festzulegen. Die Anordnung der Hohlfäden kann auch so erfolgen, daß die einzelnen Windungen eng aneinanderliegen, sich also berühren.

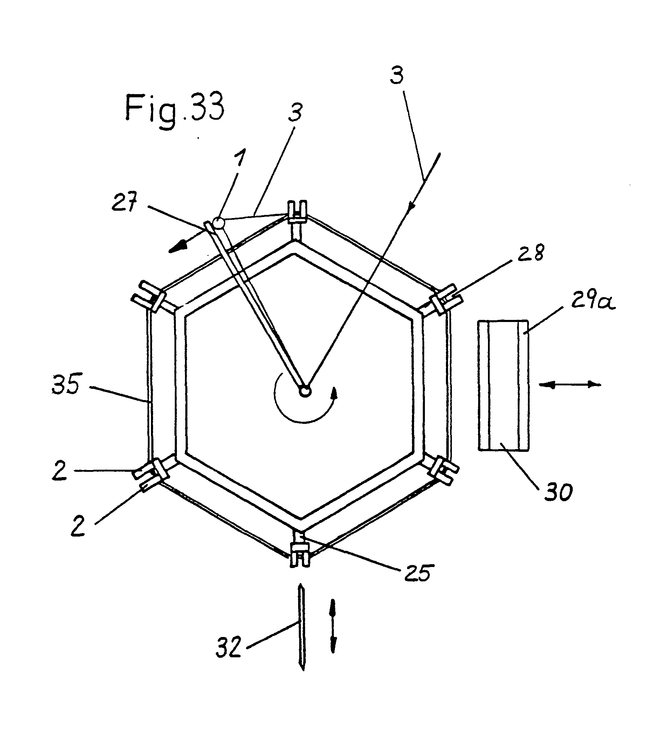

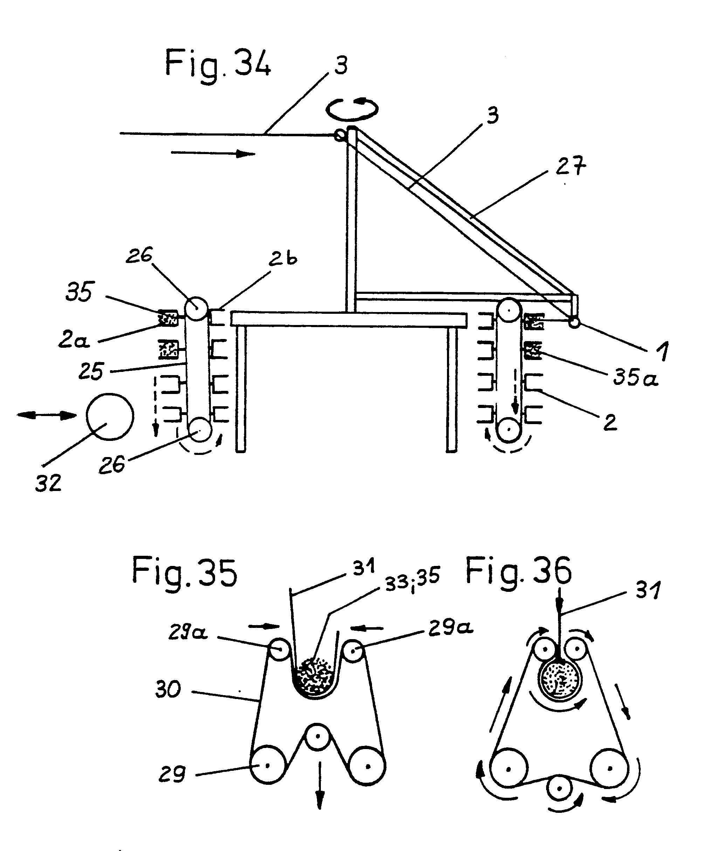

Bei der in den Fig. 33 und 34 dargestellten besonders bevorzugten Ausführungsform der erfindungsgemäßen Vorrichtung zum Herstellen von Hohlfadensträngen sind die Fadenaufnahmeorgane 2 U-förmig ausgebildet und paarweise an insgesamt 6 endlosen Rollenketten 25 gleichmäßig verteilt angeordnet. Zur Vereinfachung wurden nur zwei dieser Rollenketten 25 einschließlich der Fadenaufnahmeorgane 2 vollständig dargestellt, und zwar in der Figur 34. Die Rollenketten 25 werden durch die Kettenräder 26 gespannt gehalten und sind so angeordnet, daß sie in Draufsicht betrachtet ein regelmäßiges Sechseck bilden, so daß auch der mit dieser Vorrichtung gebildete Hohlfadenstrang 35 die Form eines regelmäßigen Sechsecks einnimmt. Die an einem rotierenden 27 angeordnete Fadenführungseinrichtung 1 bewegt sich hierbei auf einer Kreisbahn. Die paarweise angeordneten Fadenaufnahmeorgane 2 sind in einem seitlichen gegenseitigen Anstand angeordnet, so daß zwischen ihnen ein Schlitz 28 gebildet wird. Die Schnitte zum Zerteilen des Hohlfadenstranges 35 in einzelne Hohlfadenbündel 33 mit einem Schneidwerkzeug 32 werden vorzugsweise in diese Schlitze 28 gelegt. Wie aus Fig. 34 weiterhin ersichtlich, wird bei Erreichen der gewünschten Strangstärke durch gleichmäßiges Bewegen der sechs Rollenketten 25 in die durch die Pfeile gekennzeichnete Richtung der Hohlfadenstrang 35 aus dem Bewicklungsbereich nach unten fortbewegt, während gleichzeitig die sechs folgenden Paare Fadenaufnahmeorgane 2b in dem Bewicklungsbereich in Arbeitsstellung gebracht werden. Nachdem der fertiggestellte Hohlfadenstrang 35a nunmehr in Ruhe verharrt, kann seine weitere Bearbeitung, also beispielsweise das Zerteilen in Hohlfadenbündel und das Verpacken der Hohlfadenbündel, erfolgen.

Eine besonders bevorzugte Ausführungsform einer erfindungsgemäßen Einrichtung zum Umfassen, Festhalten und Verpacken der Hohlfäden 3 bzw. Hohlfadenbündel 33 ist in den Fig. 35 und 36 dargestellt. Ihre Anordnung in Wartestellung geht aus Fig. 33, rechte Seite, hervor. Diese Einrichtung besteht aus einem um fünf Rollen 29 geführten endlosen Band 30, wobei die oberen beiden Rollen 29a in der durch die Pfeile gekennzeichneten Richtung bewegbar angeordnet sind. Im geöffneten Zustand wird in diese Einrichtung eine Verpackungsfolie 31 od.dgl. eingelegt und die ganze Einrichtung so in Stellung gebracht, daß das Hohlfadenbündel 33 von der von dem Band 30 gebildeten Mulde in der dargestellten Weise umfasst wird. Durch Bewegen der beiden oberen Rollen 29a zur Mitte und das daraus resultierende Schließen der Mulde wird die in Fig. 36 dargestellte Arbeitsstellung erreicht. Sobald diese Stellung erreicht ist, kann das Hohlfadenbündel 33 aus dem Hohlfadenstrang 35 herausgeschnitten und in die Verpackungsfolie 31 eingewickelt werden. Dies geschieht, indem die Rollen 29 in der durch die Pfeile dargestellten Drehrichtung gedreht werden und das Band 30 dadurch in der ebenfalls durch die Pfeile dargestellten Richtung solange bewegt wird, bis die Folie 31 vollständig um das Hohlfadenbündel 33 herumgewickelt ist. Die Folie 31 kann anschließend zusätzlich noch verschweißt oder aufgeschrumpft werden. Durch Wiederöffnen der Einrichtung kann das nunmehr verpackte Hohlfadenbündel 31, 33 entnommen werden. Vorzugsweise wird für jedes Hohlfadenbündel 33 eine solche Einrichtung installiert, insgesamt also sechs, so daß das Abschneiden und Verpacken der Hohlfadenbündel 33 gleichzeitig erfolgen kann. Wird dagegen nur eine einzige solche in den Fig. 35 und 36 beispielshalber dargestellte Einrichtung verwendet, wie in Fig. 33 gezeigt, die die oben beschriebenen Arbeitsschritte dann sechsmal hintereinander ausführen muß, so ist dafür Sorge zu tragen, daß der Hohlfadenstrang 35 im Bereich der Schlitze 28 durch (nicht dargestellte) Klemmeinrichtungen gehalten wird, die die Hohlfadenbündel 33 solange festhalten, bis diese von dem Band 30 der Verpackungseinrichtung umfaßt sind.

Eine erfindungsgemäße Vorrichtung bestehend aus den in den Fig. 15 bis 17 und 33 bis 36 dargestellten Einrichtungen hat sich als besonders vorteilhaft zur Herstellung von Hohlfadenbündeln aus frischgesponnenen gewellten Hohlfäden, die durch Regenerieren von Cellulose aus einer Kupferammonium-Cellulose-Lösung gewonnen wurden, erwiesen, da die hiermit erzeugten Hohlfadenbündel eine hervorragende Harnstoff-Clearence bewirkten. Diese Hohlfadenbündel sind daher für die Blutdialyse bestens geeignet, und es ist auf diese Weise erstmals gelungen, frischgesponnene Hohlfäden der genannten Art direkt zu Hohlfadenbündeln zu verarbeiten, die den üblichen Anforderungen vollgerecht werden. Die Abmessungen der Hohlfäden lagen dabei in den bereits oben hierfür genannten Bereichen.

Besonders gute Ergebnisse wurden auch dann erreicht, wenn das erfindungsgemäße Verfahren unter Verwendung der in den Fig. 15 bis 17 und 33 bis 36 dargestellten Einrichtungen mit Hohlfäden aus porösem Polypropylen durchgeführt wurde, deren Abmessungen in den bereits oben hierfür genannten Bereichen lagen. Solche porösen Hohlfäden aus Polypropylen und ein Verfahren zum Herstellen derselben sind beispielsweise aus der deutschen Offenlegungsschrift 2 833 493 bekannt.

Hieran wird deutlich, daß das erfindungsgemäße Verfahren und die zu seiner Durchführung geeignete erfindungsgemäße Vorrichtung zum Herstellen von Bündeln aus Hohlfäden mit weitauseinanderliegenden Durchmesser- bzw. Wandstärkenbereichen gleichermaßen gut geeignet sind.

Versuche mit Hohlfäden aus anderen als den genannten Polymeren mit den für solche Hohlfäden bzw. den für deren vorgesehene unterschiedliche Verwendungszwecke üblichen Abmessungen haben gezeigt, daß das erfindungsgemäße Verfahren und die erfindungsgemäße Vorrichtung hinsichtlich ihrer Eignung keinen Beschränkungen unterliegen.

In Fig. 37 ist ein erfindungsgemäßes Hohlfadenbündel aus erfindungsgemäß gewellten Hohlfäden 3 dargestellt. Deutlich zu erkennen ist die gleichmäßige zick-zackförmige Wellung der Hohlfäden 3. Zur besseren Übersicht wurden die Hohlfäden 3 mit einem größeren gegenseitigen Abstand und in einem geordneteren Zustand dargestellt, als dies bei Verwendung eines solchen Hohlfadenbündels in einer der üblichen Austauscheinrichtungen gegebenenfalls der Fall ist. Auch kann die Anzahl der Hohlfäden 3 erheblich größer sein als bei dem in der Fig. 37 dargestellten Hohlfadenbündel und beispielsweise mehrere hundert betragen. Ebenfalls zur Vereinfachung wurden die gewellten Hohlfäden 3 ohne gegenseitige Phasenverschiebung, wie sie häufig erwünscht ist, dargestellt, d.h. in der vorliegenden Abbildung treten Wellenberge und Wellentäler stets in gleichen Abständen von den Enden des Hohlfadenbündels auf. Bei einem aus solchen Hohlfäden 3 hergestellten ungeordneten Hohlfadenbündel liegen die Wellungen der Hohlfäden im allgemeinen in unterschiedlichen Ebenen, also nicht parallel zueinander, so daß sich selbst ohne die an sich vorteilhafte gegenseitige Phasenverschiebung im allgemeinen ein häufig bereits ausreichend lockeres Hohlfadenbündel ergibt.

In Fig. 38 ist ein erfindungsgemäßes Hohlfadenbündel dargestellt, bei dem die Wellung der Hohlfäden 3 wellenförmig ausgebildet ist. Darüber hinaus sind hierbei die Hohlfäden 3 in bezug auf ihre Wellung mit einer Phasenverschiebung angeordnet, d.h. Wellenberge und Wellentäler sind hierbei in unterschiedlichen Abständen von den Enden des Hohlfadenbündels angeordnet. Zur besseren Übersicht wurden nur vier solcher phasenverschoben angeordneten Hohlfäden 3 dargestellt. Ein Hohlfadenbündel aus solchen in der dargestellten Weise angeordneten Hohlfäden 3 kann jedoch aus mehreren hundert oder tausend Hohlfäden 3 bestehen und auch eine beliebige Länge aufweisen, so daß eine weitaus größere Zahl von Wellentälern und Wellenbergen als in Fig. 38 dargestellt, vorhanden ist. Dies gilt sinngemäß für alle in den Fig. 37 bis 40 dargestellten Hohlfadenbündel.

In Fig. 39 ist ein Beispiel für das Anordnen unterschiedlich ausgebildeter Hohlfäden 3 in einem erfindungsgemäßen Hohlfadenbündel dargestellt. Die Hohlfäden 3 unterscheiden sich hierbei durch die Art und Bemessung der Wellung, und zwar weist die eine Hälfte der Hohlfäden 3 eine zick-zack-förmige Wellung mit jedoch unterschiedlicher Abmessung auf, während die andere Hälfte eine wellenförmige Wellung ebenfalls mit unterschiedlichen Abmessungen aufweist. Durch die unterschiedlichen Abmessungen der Wellungen ergibt sich zwangsläufig eine Phasenverschiebung, wobei durch die Kombination unterschiedlicher Abmessungen und Ausbildungen der Wellung ein besonders lockeres Fadenbündel erhalten wird.

Fig. 40 zeigt ein erfindungsgemäßes Hohlfadenbündel, in welchem Hohlfäden 3 mit einer zick-zack-förmigen Wellung und ungewellte Hohlfäden 3 angeordnet sind. Häufig nämlich genügt es zum Erzielen eines lockeren Hohlfadenbündels bereits, wenn nur ein Teil der hierfür verwendeten Hohlfäden eine Wellung aufweist.

Im Rahmen der vorliegenden Erfindung ist es weiterhin möglich, den Hohlfäden andere als die dargestellten Wellungsformen zu erteilen und auch andere Anordnungen bzw. Kombinationen gewellter und nicht gewellter Hohlfäden zu wählen.

Fig. 41 zeigt eine Fadenführungseinrichtung, bei welcher die Hohlfäden 3 über Fadenführungsrollen 38, die an einem rotierenden Arm 27 angeordnet sind, geführt werden.

Fig. 42 zeigt eine Fadenführungseinrichtung, bei welcher die Hohlfäden 3 durch das rotierende gebogene Führungsrohr 39 geführt werden. Diese Fadenführungseinrichtungen können bei den Vorrichtungen zum Herstellen von Hohlfadensträngen bzw. -bündeln verwendet werden.

**Patentansprüche**

1. Verfahren zum Herstellen von Hohlfadenbündeln mit im wesentlichen parallel zueinander angeordneten Hohlfäden, bei welchem wenigstens ein Hohlfaden mit einer bewegten Fadenführungseinrichtung um wenigstens zwei in einem gegenseitigen Abstand voneinander angeordneten Fadenaufnahmeorgane zu einem Hohlfadenstrang aufgewickelt wird, dadurch gekennzeichnet, daß die bewickelten Fadenaufnahmeorgane jeweils nach Erreichen der gewünschten Strangstärke, also taktweise, aus dem von der Fadenführungseinrichtung überstrichenen Bewicklungsbereich herausbewegt werden, daß gleichzeitig unbewickelte Fadenaufnahmeorgane in den Bewicklungsbereich und dort in Arbeitsstellung gebracht werden, wobei gegebenenfalls vorhandene weitere Fadenaufnahmeorgane analog diesem Transporttakt ebenfalls nur taktweise vorwärtsbewegt werden, um auf diese Weise in freigewordene Positionen nachzurücken, und daß der Hohlfadenstrang anschließend in Bündel zerschnitten wird.

2. Verfahren nach Anspruch 1, dadurch gekennzeichnet, daß der Hohlfaden (die Hohlfäden) der Fadenführungseinrichtung in frischgesponnenem Zustand zugeführt wird (werden).

3. Verfahren nach Anspruch 1 oder 2, dadurch gekennzeichnet, daß durch entsprechendes Anordnen der Fadenaufnahmeorgane ein polygonaler Hohlfadenstrang gebildet wird.

4. Verfahren nach Anspruch 3, dadurch gekennzeichnet, daß durch entsprechendes Anordnen der Fadenaufnahmeorgane ein polygonaler Hohlfadenstrang mit unterschiedlichen Seitenlängen gebildet wird.

5. Verfahren nach einem der Ansprüche 1 bis 4, dadurch gekennzeichnet, daß der Hohlfadenstrang in Abschnitte unterschiedlicher Länge zerschnitten wird.

6. Verfahren nach einem der Ansprüche 1 bis 5, dadurch gekennzeichnet, daß wenigstens ein Hohlfaden wenigstens abschnittsweise gewellt und einer Fixierbehandlung zur bleibenden Fixierung der Wellung unterworfen wird.

7. Verfahren nach einem der Ansprüche 1 bis 6, dadurch gekennzeichnet, daß das Wellen der Hohlfäden und das Fixieren der Wellung vor dem Aufwickeln durchgeführt wird.

8. Verfahren nach einem der Ansprüche 1 bis 6, dadurch gekennzeichnet, daß das Wellen der Hohlfäden und das Fixieren der Wellung nach dem Zerschneiden des Hohlfadenstranges durchgeführt wird.

9. Verfahren nach einem der Ansprüche 1 bis 8, dadurch gekennzeichnet, daß der Hohlfadenstrang vor dem Zerschneiden auf wenigstens einem Teilabschnitt von wenigstens einem die Hohlfäden nach dem Zerschneiden zusammenhaltenden Hilfsmittel umfaßt wird.

10. Verfahren nach einem der Ansprüche 1 bis 9, dadurch gekennzeichnet, daß zwischen jedem einen Teilabschnitt des Hohlfadenstranges umfassenden Hilfsmittel und den Hohlfäden ein Teil je einer Verpackungsfolie angeordnet wird, die jede nach dem Zerschneiden des Hohlfadenstranges vollständig in mehreren Lagen um das ihr zugeordnete Hohlfadenbündel herumgewickelt wird.

11. Verfahren nach einem der Ansprüche 1 bis 10, dadurch gekennzeichnet, daß zum Wellen der Hohlfäden die Hohlfäden in eine definiert vorgegebene immerwiederkehrende Form gebracht und in dieser Form einer Fixierbehandlung zur bleibenden Fixierung der Wellung unterworfen werden.

12. Verfahren nach einem der Ansprüche 1 bis 11, dadurch gekennzeichnet, daß die Hohlfäden in regelmäßiger Wellenform fixiert werden.

13. Verfahren nach einem der Ansprüche 1 bis 11, dadurch gekennzeichnet, daß die Hohlfäden in regelmäßiger Zick-Zack-Form fixiert werden.

14. Verfahren nach einem der Ansprüche 1 bis 11, dadurch gekennzeichnet, daß die Hohlfäden in Schraubenfederform fixiert werden.

15. Verfahren nach einem der Ansprüche 1 bis 14, dadurch gekennzeichnet, daß die gewellten Hohlfäden mit einer gegenseitigen Phasenverschiebung der Wellung aufgewickelt werden.

16. Verfahren nach einem der Ansprüche 1 bis 15, dadurch gekennzeichnet, daß den Hohlfäden eine unterschiedlich ausgebildete und/oder bemessene Wellung erteilt wird.

17. Verfahren nach einem der Ansprüche 1 bis 16, dadurch gekennzeichnet, daß Hohlfäden verwendet werden, die durch Regenerieren von Cellulose aus Kupferammonium-Cellulose-Lösungen gewonnen wurden.

18. Verfahren nach einem der Ansprüche 1 bis 17, dadurch gekennzeichnet, daß Hohlfäden verwendet werden, die einen im Bereich von 100 µm bis 300 µm liegenden Innendurchmesser und eine im Bereich von 3 µm bis 20 µm liegende Wandstärke haben.

19. Verfahren nach einem der Ansprüche 1 bis 16, dadurch gekennzeichnet, daß Hohlfäden aus porösem Polypropylen verwendet werden.

20. Verfahren nach einem der Ansprüche 1 bis 16 oder 19, dadurch gekennzeichnet, daß Hohlfäden verwendet werden, die einen im Bereich von 200 µm bis 2000 µm liegenden Innendurchmesser und eine im Bereich von 50 µm bis 400 µm liegende Wandstärke haben.

21. Verfahren nach einem der Ansprüche 1 bis 20, dadurch gekennzeichnet, daß das Fixieren der Wellung der Hohlfäden unter Wärmeeinwirkung durchgeführt wird.

22. Verfahren nach einem der Ansprüche 1 bis 21, dadurch gekennzeichnet, daß das Fixieren der Wellung der Hohlfäden unter der Einwirkung von Feuchtigkeit und Wärme durchgeführt wird.

23. Verfahren nach einem der Ansprüche 1 bis 22, dadurch gekennzeichnet, daß durch entsprechendes Anordnen der Fadenaufnahmeorgane ein in einer im wesentlichen waagerechten Ebene liegender Hohlfadenstrang gebildet wird.

24. Verfahren nach einem der Ansprüche 1 bis 23, dadurch gekennzeichnet, daß das Zusammenfassen der Hohlfäden vor dem Zerschneiden des Stranges, das Zerschneiden des Hohlfadenstranges in Hohlfadenbündel und das Verpacken der Hohlfadenbündel maschinell und automatisch durchgeführt wird.

25. Vorrichtung geeignet zum Durchführen des Verfahrens nach den Ansprüchen 1 bis 24 mit einer bewegbaren Fadenführungseinrichtung und wenigstens vier Fadenaufnahmeorganen (2), die in wenigstens zwei Gruppen bewegbar und zwar derart angeordnet sind, daß sich wenigstens zwei zweite Fadenaufnahmeorgane (2b) zwangsläufig außerhalb des von der Fadenführungseinrichtung (1) überstreichbaren Bewicklungsbereiches in Bereitstellung befinden, solange wenigstens zwei erste Fadenaufnahmeorgane (2a) in dem genannten Bewicklungsbereich in Arbeitsstellung gebracht worden sind, und daß wenigstens zwei zweite Fadenaufnahmeorgane (2b) ohne Beeinträchtigung oder Unterbrechung des Bewicklungsvorganges zwangsläufig in die genannte Arbeitsstellung gebracht werden, wenn die ersten Fadenaufnahmeorgane (2a) aus dem Bewicklungsbereich entfernt werden, gekennzeichnet durch eine Einrichtung (11, 12, 13, 14), mit welcher die Hohlfäden (3) zwangsläufig in eine wellenähnliche Form überführbar sind und die vor der den Hohlfadenstrang (35) bildenden Wickeleinrichtung (1, 2, 4, 5, 6; 1, 2, 25, 27, 28) angeordnet ist und mit derselben Geschwindigkeit bewegbar ist, mit der die Hohlfäden (3) dieser Wickeleinrichtung (1, 2, 4, 5, 6; 1, 2, 25, 27, 28) zugeführt werden können, sowie eine Fixierzone (34), in welcher die den Hohlfäden (3) aufgezwungene Form bleibend fixiert werden kann.

26. Vorrichtung nach Anspruch 25, gekennzeichnet durch Einrichtungen (29, 30; 32) zum Umfassen und Festhalten der Hohlfadenbündel (33), zum Zerschneiden des Hohlfadenstrangs (35) in Bündel (33) und zum Verpacken der Hohlfadenbündel (33).

27. Vorrichtung nach Anspruch 25 oder 26, dadurch gekennzeichnet, daß die Fadenführungeinrichtung (1) auf einer Kreisbahn bewegbar angeordnet ist, daß die Fadenaufnahmeorgane (2) U-förmig ausgebildet und paarweise mit einem gegenseitigen seitlichen Abstand auf insgesamt sechs endlosen taktweise bewegbaren Rollenketten (25) oder dergl. gleichmäßig verteilt derart angeordnet sind, daß die im Bewicklungsbereich befindlichen Fadenaufnahmeorgane (2a) ein in einer horizontalen Ebene liegendes regelmäßiges Sechseck bilden, und daß für jedes der sechs auf diese Weise herstellbaren Hohlfadenbündel (33) eine automatisch arbeitende Einrichtung (32) zum Zerschneiden des Hohlfadenstranges (35) in Bündel (33) und eine Einrichtung (29, 30) zum Umfassen, Festhalten und Verpacken der Hohlfadenbündel (33) in eine Verpackungsfolie (31) angeordnet ist.

28. Hohlfadenbündel mit im wesentlichen parallel zueinander angeordneten Hohlfäden, von denen wenigstens ein Hohlfaden wenigstens abschnittsweise gewellt ist, herstellbar nach dem Verfahren nach den Ansprüchen 6 bis 24, dadurch gekennzeichnet, daß es im Vergleich zu einem ungewellten, ansonsten jedoch gleichen Hohlfadenbündel einen wenigstens 1,5-fachen Druckverlust beim Umströmen der Hohlfäden (3) in Längsrichtung mit Wasser aufweist.

29. Hohlfadenbündel nach Anspruch 28, dadurch gekennzeichnet, daß die Hohlfäden (3) durch Regenerieren von Cellulose aus einer Kupferammonium-Cellulose-Lösung gewonnen wurden.

30. Hohlfadenbündel nach Anspruch 28 oder 29, dadurch gekennzeichnet, daß die Hohlfäden (3) einen im Bereich von 100 bis 300 µm liegenden Innendurchmesser und eine im Bereich von 3 µm bis 20 µm liegende Wandstärke haben.

31. Hohlfadenbündel nach Anspruch 28, dadurch gekennzeichnet, daß die Hohlfäden (3) aus porösem Polypropylen bestehen.

32. Hohlfadenbündel nach Anspruch 28 oder 31, dadurch gekennzeichnet, daß die Hohlfäden (3) eine im Bereich von 50 µm bis 400 µm liegende Wandstärke und einem im Bereich von 200 µm bis 2000 µm liegenden Innendurchmesser haben.

33. Hohlfadenbündel nach einem der Ansprüche 28 bis 32, dadurch gekennzeichnet, daß nur ein Teil der Hohlfäden (3) gewellt ist.

34. Hohlfadenbündel nach einem der Ansprüche 28 bis 32, dadurch gekennzeichnet, daß alle Hohlfäden (3) gewellt sind.

35. Nohlfadenbündel nach einem der Ansprüche 28 bis 34, dadurch gekennzeichnet, daß die Hohlfäden (3) zick-zack-förmig gewellt sind.

36. Hohlfadenbündel nach einem der Ansprüche 28 bis 35, dadurch gekennzeichnet, daß die Hohlfäden (3) hinsichtlich ihrer Wellung phasenverschoben zueinander angeordnet sind.

37. Hohlfadenbündel nach einem der Ansprüche 28 bis 36, dadurch gekennzeichnet, daß die Hohlfäden (3) unterschiedlich ausgebildete und bemessene Wellungsformen aufweisen.

38. Verwendung des nach den Ansprüchen 1 bis 24 hergestellten Hohlfadenbündels bzw. des Hohlfadenbündels nach einem der Ansprüche 28 bis 37 zu: Stoffaustausch, Stoffübertragung, Wärmeübertragung, kombinierter Wärme-Stoffübertragung.

39. Verwendung nach Anspruch 38 zur Dialyse.

40. Verwendung nach Anspruch 38 oder 39 zur Blutdialyse.

## Claims

1. Process for producing bundles of hollow filaments in an essentially parallel arrangement, where at least one hollow filament is wound with a moving filament guide means around at least two mutually spaced-apart filament take-up members to give a hollow filament strand, characterised in that whenever the desired strand thickness is attained, i.e. periodically, the wrapped filament take-up members are moved out of the winding area covered by the filament guide means, but at the same time unwrapped filament take-up members are brought into the winding area and there into the workig position, any further filament take-up members likewise being moved forwards only periodically analogously to this transport period in order thus to move up into the newly unoccupied positions, and that the hollow filament strand is subsequently cut into bundles.

2. Process according to Claim 1, characterised in that the hollow filament or filaments is or are delivered to the filament guide means in the freshly spun state.

3. Process according to Claim 1 or 2, characterised in that an appropriate arrangement of the filament take-up members a polygonal hollow filament strand is formed.

4. Process according to Claim 3, characterised in that by appropriate arrangement of the filament take-up members polygonal hollow filament strand having different edge lengths is formed.

5. Process according to any one of Claim 1 to 4, characterised in that the hollow filament strand is cut into sections of different lengths.

6. Process according to any one of Claims 1 to 5, characterised in that at least one hollow filament is waved at least sectionally and subjected to a stabilising treatment for the permanent stabilisation of the wave.

7. Process according to any one of Claims 1 to 6, characterised in that the waving of hollow filaments and the stabilisation of the waves is carried out before the winding on.

8. Process according to any one of Claims 1 to 6, characterised in that the waving of the hollow filaments and the stabilising of the waves is carried out after the hollow filament strand is cut.

9. Process according to any one of Claims 1 to 8, characterised in that before it is cut the hollow filament strand is encircled along at least one part section by at least one auxiliary means which holds the hollow filaments together after cutting.

10. Process according to any one of Claims 1 to 9, characterised in that between every auxiliary means encircling a part section of the hollow filament strand and the hollow filaments there is arranged a part of one packaging film each, each of which is wrapped completely in a plurality of layers around its associated hollow filament bundle after the hollow filament strand has been cut.

11. Process according to any one of Claims 1 to 10, characterised in that to wave the hollow filaments the hollow filaments are introduced into a predefined ever-recurring mould and are subjected in this mould to a stabilising treatment for the permanent stabilisation of the waves.

12. Process according to any one of Claims 1 to 11, characterised in that the hollow filaments are stabilised in regular wave form.

13. Process according to any one of Claims 1 to 11, characterised in thath the hollow filaments are stabilised in regular zigzag form.

14. Process according to any one of Claims 1 to 11, characterised in that the hollow filaments are stabilised in helical spring form.

15. Process according to any one of Claims 1 to 14, charcterised in that the waved hollow filaments are wound up with a mutual phase shift of the wave.

16. Process according to any one of Claims 1 to 15, characterised in that the hollow filaments receive a differently constructed and/or dimensioned wave.

17. Process according to any one of Claims 1 to 16, characterised in that the hollow filaments used were obtained by regenerating cellulose from cuprammonium cellulose solutions.

18. Process according to any one of Claims 1 to 17, characterised in that the hollow filaments used have an internal diameter within the range from 100 $\mu$m to 300 $\mu$m and a wall thickness within the range from 3 $\mu$m to 20 $\mu$m.

19. Process according to any one of Claims 1 to 16, characterised in that hollow filaments made with porous polypropylene are used.

20. Process according to any one of Claims 1 to 16 or 19, characterised in that the hollow filaments used have an internal diameter within the range from 200 $\mu$m to 2000 $\mu$m and a wall thickness within the range from 50 $\mu$m to 400 $\mu$m.

21. Process according to any one of Claims 1 to 20, characterised in that the stabilising of the wave of the hollow filaments is carried out under the action of heat.

22. Process according to any one of Claims 1 to 21, characterised in that the stabilising of the wave of the hollow filaments is carried out under the action of moisture and heat.

23. Process according to any one of Claims 1 to 22, characterised in that by appropriate arrangement of the filament take-up members a hollow filament strand lying in an essentially horizontal plane is formed.

24. Process according to any one of Claims 1 to 23, characterised in that the gathering together of hollow filaments before the cutting of the strand, the cutting of the hollow filament strand into hollow filament bundles and the packaging of the hollow filament bundles is carried out by machine and automatic means.

25. Apparatus suitable for carrying out the process according to Claims 1 to 24, comprising a movable filament guide means and at least four filament take-up members (2) which are movable in at least two groups and arranged in such a way that at least two second filament take-up members (2b) are inevitably present in readiness position outside the winding area traversable by the filament guide means (1) as long as at least two first filament take-up members (2a) have been brought in said winding area into the working position, and at least two second filament take-up members (2b) are inevitably brought without impairment or interruption of the winding process into said working position when the first filament take-up members (2a) are removed out of the winding area, characterised by a means (11, 12, 13, 14) with which the hollow filaments (3) are inevitably convertible into a wave-like form and which is arranged upstream of the winding means (1, 2, 4, 5, 6; 1, 2, 25, 27, 28) forming the hollow filament strand (35) and is movable with the same speed at which the hollow filaments (3) can be delivered to this winding means (1, 2, 4, 5, 6; 1, 2, 25, 27, 28), and also a stabilising zone (34) in which the form forced on the hollow filaments (3) can be permanently stabilised.

26. Apparatus according to Claim 25, characterised by means (29, 30; 32) for encircling and holding the hollow filament bundles (33), for cutting the hollow filament strand (35) into bundles (33) and for packaging the hollow filament bundles (33).

27. Apparatus according to Claim 25 or 26, characterised in that the filament guide means (1) is arranged movably along a circular path, but the filament take-up members (2) have a U-shape and are arranged pairwise uniformly distributed with a mutual lateral spacing over a total of six endless periodically movable roller chains (25) or the like in such a way that the filament take-up members (2a) present in the winding area form a regular hexagon lying in a horizontal plane, and that for each of the six hollow filament bundles (33) producible in this way there is arranged an automatic means (32) for cutting the hollow filament strand (35) into bundles (33) and a means (29, 30) for encircling, holding and packaging the hollow filament bundles (33) into a packaging film (31).

28. Bundle of hollow filaments in an essentially parallel arrangement of which at least one hollow filament has been at least sectionally waved, producible by the process according to Claims 6 to 24, characterised in that compared with an unwaved but otherwise identical hollow filament bundle it produces at least 1.5 times the pressure loss when water flows around the hollow filaments (3) in the longitudinal direction.

29. Hollow filament bundle according to Claim 28, characterised in that the hollow filaments (3) were obtained by regenerating cellulose from a cuprammonium cellulose solution.

30. Hollow filament bundle according to Claim 28 or 29, characterised in that the hollow filaments (3) have an internal diameter within the range from 100 to 300 µm and a wall thickness within the range from 3 µm to 20 µm.

31. Hollow filament bundle according to Claim 28, characterised in that the hollow filaments (3) consist of porous polypropylene.

32. Hollow filament bundle according to Claim 28 or 31, characterised in that the hollow filaments (3) have a wall thickness within the range from 50 µm to 400 µm and an internal diameter within the range from 200 µm to 2000 µm.

33. Hollow filament bundle according to any one of Claims 28 to 32, characterised in that only some of the hollow filaments (3) have been waved.

34. Hollow filament bundle according to any one of Claims 28 to 32, characterised in that all the hollow filaments (3) have been waved.

35. Hollow filament bundle according to any one of Claims 28 to 34, characterised in that the hollow filaments (3) have been waved in a zigzag shape.

36. Hollow filament bundle according to any one of Claims 28 to 35, characterised in that the hollow filaments (3) have been arranged phase-shifted relative to one another as regards their wave.

37. Hollow filament bundle according to any one of Claims 28 to 36, characterised in that the hollow filaments (3) have differently constructed and dimensioned wave shapes.

38. Use of the hollow filament bundles produced according to Claims 1 to 24 or of the hollow filament bundles according to any one of Claims 28 to 37 for: exchange of matter, mass transfer, heat transfer, combined heat/mass transfer.

39. Use according to Claim 38, for dialysis.

40. Use according to Claim 38 or 39, for haemodialysis.

## Revendications

1. Procédé pour la fabrication de faisceaux de fils creux comprenant des fils creux disposés sensiblement parallèlement les uns par rapport aux autres, suivant lequel au moins un fil creux est enroulé, à l'aide d'un dispositif de guidage de fil en mouvement, en un écheveau de fil creux autour d'au moins deux organes de réception de fil disposés à distance l'un de l'autre, caractérisé par le fait que les organes de réception, sur lesquels le fil est enroule, sont retirés, chaque fois que l'épaisseur d'écheveau souhaitée est atteinte, c'est-à-dire en cadence, de la zone d'enroulement desservie par le dispositif de guidage de fil, qu'en même temps des organes de réception de fil n'ayant pas encore reçu d'enroulement sont amenés dans la zone d'enroulement et placés ici en position de travail, des organes de réception de fil supplémentaires existant éventuellement étant également avancés uniquement de manière cadencée, afin d'occuper ainsi des positions venant d'être libérées, et que l'écheveau de fil creux est ensuite decoupé en faisceaux.

2. Procédé selon la revendication 1, caractérisé par le fait que le(s) fil(s) creux est (sont) amené(s) à l'état fraîchement filé au dispositif de guidage de fil.

3. Procédé selon la revendication 1 ou 2, caractérisé par le fait que par la disposition correspondante des organes de réception de fil, un écheveau polygonal de fil creux est formé.

4. Procédé selon la revendication 3, caractérisé par le fait que par la disposition correspondante des organes de réception de fil, un écheveau polygonal de fil creux avec des longueurs de coté differentes est formé.

5. Procédé selon l'une quelconque des revendications 1 à 4, caractérisé par le fait que l'écheveau de fil creux est découpé en portions de différentes longueurs,

6. Procédé selon l'une quelconque des revendications 1 à 5, caractérisé par le fait qu'au moins un fil creux est ondulé au moins par portions et soumis à un traitement de fixation pour une fixation permanente de l'ondulation.

7. Procédé selon l'une quelconque des revendications 1 à 6, caractérisé par le fait que l'ondulation des fils creux et la fixation de l'ondulation sont effectuées avant l'enroulement.

8. Procédé selon l'une quelconque des revendications 1 à 6, caractérisé par le fait que l'ondulation des fils creux et la fixation de l'ondulation sont effectuées après le découpage de l'écheveau de fil creux.

9. Procédé selon l'une quelconque des revendications 1 à 8, caractérisé par le fait qu'avant le découpage, l'écheveau de fil creux est entouré dans au moins une portion par au moins un moyen auxiliaire qui maintient les fils creux ensemble après le découpage.

10. Procédé selon l'une quelconque des revendications 1 à 9, caractérisé par le fait qu'entre chaque moyen auxiliaire, entourant une portion de l'écheveau de fil creux, et les fils creux est disposée une partie d'une feuille d'emballage qui est enroulée, après le découpage de l'écheveau de fil creux, complètement en plusieurs couches autour du faisceau de fils creux qui lui est associé.

11. Procéde selon l'une quelconque des revendications 1 à 10, caractérisé par le fait que pour l'ondulation des fils creux, ces derniers reçoivent une forme définie, prédéterminée, se reproduisant régulierement et sont soumis sous cette forme à un traitement de fixation pour la fixation permanente de l'ondulation.

12. Procédé selon l'une quelconque des revendications 1 à 11, caractérisé par le fait que les fils creux sont fixés sous une forme ondulée régulière.

13. Procédé selon l'une quelconque des revendications 1 à 11, caractérisé par le fait que les fils creux sont fixés sous une forme en zigzag regulière.

14. Procédé selon l'une quelconque des revendications 1 à 11, caractérisé par le fait que les fils creux sont fixés sous une forme hélicoïdale.

15. Procédé selon l'une quelconque des revendications 1 à 14, caractérisé par le fait que les filx creux ondulés sont enroulés avec un déphasage mutuel de l'ondulation.

16. Procédé selon l'une quelconque des revendications 1 à 15, caractérisé par le fait que les fils creux reçoivent une ondulation de formes et/ou de dimensions différentes.

17. Procédé selon l'une quelconque des revendications 1 à 16, caractérisé par le fait que l'on utilise des fils creux obtenus par la régénération de cellulose a partir de solutions de cellulose dans le cuivre ammoniacal.

18. Procédé selon l'une quelconque des revendications 1 à 17, caractérisé par le fait que l'on utilise des fils creux d'un diamètre intérieur se situant dans la plage de 100 μm à 300 μm et d'une épaisseur de paroi se situant dans la plage de 3 μm à 20 μm.

19. Procédé selon l'une quelconque des revendications 1 à 16, caractérisé par le fait que l'on utilise des fils creux en polypropylène poreux.

20. Procédé selon l'une quelconque des revendications 1 à 16 ou 19, caractérisé par le fait que l'on utilise des fils creux d'un diamètre intérieur se situant dans la plage de 200 μm à 2000 μm et d'une épaisseur de paroi se situant dans la plage de 50 μm à 400 μm.

21. Procédé selon l'une quelconque des revendications 1 à 20, caractérisé par le fait que la fixation de l'ondulation des fils creux est effectuée sous l'action de chaleur.

22. Procédé selon l'une quelconque des revendications 1 à 21, caractérisé par le fait que la fixation de l'ondulation des fils creux est effectuée sous l'action d'humidité et de chaleur.

23. Procédé selon l'une quelconque des revendications 1 à 22, caractérisé par le fait que par la disposition correspondante des organes de reception de fil, il est formé un écheveau de fil creux qui se trouve dans un plan sensiblement horizontal.

24. Procédé selon l'une quelconque des revendications 1 à 23, caractérisé par le fait que le maintien des fils creux avant le découpage de l'écheveau, le découpage de l'écheveau de fil creux en faisceaux de fils creux et l'emballage des faisceaux de fils creux sont effectués de façon mécanique et automatique.

25. Dispositif adapté à la mise en oeuvre du procédé selon les revendications 1 à 24, comprenant un dispositif de guidage de fil deplaçable et au moins quatre organes (2) de reception de fil qui sont déplaçables en au moins deux groupes et disposés de telle manière qu'au moins deux deuxièmes organes (2b) de réception de fil se trouvent en position d'attente obligatoirement en dehors de la zone d'enroulement pouvant être desservie par le dispositif (1) de guidage de fil, tant qu'au moins deux premiers organes (2a) de réception de fil ont été amenés en position de travail dans ladite zone d'enroulement, et qu'au moins deux deuxièmes organes (20) de réception de fil sont amenés obligatoirement dans ladite position de travail, sans que l'opération d'enroulement soit génée ou interrompue, lorsque les premiers organes (2a) de réception de fil sont retirés de la zone d'enroulement, caractérisé par un dispositif (11, 12, 13, 14) par lequel les fils creux (3) sont amenés obligatoirement sous une forme ressemblant à une ondulation, qui est disposé en amont du dispositif d'enroulement (1, 2, 4, 5, 6; 1, 2, 25, 27, 28) formant l'écheveau (35) de fil creux et qui peut être déplacé à la même vitesse que celle à laquelle les fils creux (3) sont amenés à ce dispositif d'enroulement (1, 2, 4, 5, 6; 1, 2, 25, 27, 28), et par une zone de fixation (34) dans laquelle la forme imprimée aux fils creux (3) peut être fixée de manière permanente.

26. Dispositif selon la revendication 25, caractérisé par des dispositifs (29, 30; 32) pour entourer et maintenir les faisceaux (33) de fils creux, pour découper l'écheveau (35) de fil creux en faisceaux (33) et pour emballer les faisceaux (33) de fils creux.

27. Dispositif selon la revendication 25 ou 26, caractérisé par le fait que le dispositif (1) de guidage de fil est disposé de façon déplaçable sur une trajectoire circulaire, que les organes (2) de réception de fil sont réalisés en forme de U et régulièrement répartis par paires, en étant réciproquement espacés latéralement, sur au total six chaines à rouleaux (25) sans fin ou analogues, déplaçables en cadence, de manière que les organes (2a) de réception de fil se trouvant dans la zone d'enroulement forment un hexagone régulier situé dans un plan horizontal, et que pour chacun des six faisceaux (33) de fils creux pouvant être réalisés de cette manière, il est prévu un dispositif (32) automatique pour le découpage de l'écheveau (35) de fil creux en faisceaux (33) et un dispositif (29, 30) pour entourer, maintenir et emballer les faisceaux (33) ce fils creux dans une feuille d'emballage (31).

28. Faisceau de fils creux qui comprend des fils creux, disposés sensiblement parallèlement les uns par rapport aux autres et dont au moins un fil creux est ondulé au moins par portions, et qui peut être réalisé suivant le procédé selon les revendications 6 à 24, caractérisé par le fait qu'il présente, par rapport à un faisceau de fils creux non ondulé mais par ailleurs identique, une perte de charge multipliée par 1,5, lors de l'écoulement d'eau dans le sens longitudinal autour des fils creux (3).

29. Faisceau de fils creux selon la revendication 28, caractérisé par le fait que les fils creux (3) ont été obtenus par régénération de cellulose à partir d'une solution de cellulose dans le cuivre ammoniacal.

30. Faisceau de fils creux selon la revendication 28 ou 29, caractérisé par le fait que les fils creux (3) presentent un diamètre intérieur se situant dans la plage de 100 à 300 μm et une épaisseur de paroi se situant dans la plage de 3 μm à 20 μm.

31. Faisceau de fils creux selon la revendication 28, caractérisé par le fait que les fils creux (3) sont en polypropylène poreux.

32. Faisceau de fils creux selon la revendication 28 ou 31, caractérisé par le fait que les fils creux (3) présentent une épaisseur de paroi se situant dans la plage de 50 μm à 400 μm et un diamètre intérieur se situant dans la plage de 200 à 2000 μm.

33. Faisceau de fils creux selon l'une quelconque des revendications 28 à 32, caractérisé par le fait que seule une partie des fils creux (3) est ondulée.

34. Faisceau de fils creux selon l'une quelconque des revendications 28 à 32, caractérisé par le fait que tous les fils creux (3) sont ondulés.

35. Faisceau de fils creux selon l'une quelconque des revendications 28 à 34, caractérisé par le fait que les fils creux (3) sont ondulés en forme de zigzag.

36. Faisceau de fils creux selon l'une quelconque des revendications 28 à 35, caractérisé par le fait que les fils creux (3) sont disposés avec déphasage les uns par rapport aux autres en ce qui concerne leur ondulation..

37. Faisceau de fils creux selon l'une quelconque des revendications 28 à 36, caractérisé par le fait que les fils creux (3) présentent des ondulations de formes et de dimensions différentes.

38. Utilisation du faisceau de fils creux réalisé selon les revendications 1 à 24 ou du faisceau de fils creux selon l'une quelconque des revendications 28 à 37 pour: l'échange de matière, le transfert de matière, le transfert de chaleur, le transfert combiné de chaleur et de matière.

39. Utilisation selon la revendication 38 pour la dialyse.

40. Utilisation selon la revendication 38 ou 39 pour la dialyse de sang.

Fig.1

3

3

2a

2b

1

5

4

6

Fig.2

5

4

3

2a

2b

6

35

1

2a

2b

Fig.41

3

27

38

Fig.42

39

3

1

Fig. 3

Fig 14

Fig. 4

Fig. 5

Fig. 6

EP 0 116 155 B1

## Fig. 7

35
2a
4
2b

## Fig.8a

2a
35

## Fig.8b

2a
35

## Fig.8c

2a
35

## Fig.8d

2a
35

7

Fig.12

Fig.9

Fig.11

Fig.13

Fig.10

Fig. 17

$\overline{XVI}$

34

14

11

13

12

$\overline{XVI}$

Fig. 16

14

$\overline{XVII}$

34

11

12

$\overline{XVII}$

11

12

3

14

13

34

3

12

11

3

13

14

Fig. 15

Fig.19

Fig.18

Fig.20

Fig.21

Fig.22

## Fig.23

## Fig.24

Fig. 25

Fig. 26

Fig. 27

Fig. 28

Fig. 29

Fig. 31

Fig. 30

Fig. 32

Fig.33

## Fig. 34

## Fig. 35

## Fig. 36

Fig.37

Fig.38

Fig.39

Fig.40